# EUROPEAN PATENT APPLICATION

(11) **EP 4 016 673 A1**
(43) Date of publication of application: **22.06.2022**
(21) Application number: 19954470.1
(22) Date of filing: 28.11.2019
(51) Int. Cl.: H01M 4/36

(54) **NEGATIVE ELECTRODE, ELECTROCHEMICAL DEVICE CONTAINING SAME AND ELECTRONIC DEVICE**

(71) Applicant: Ningde Amperex Technology Limited, Ningde, Fujian 352100 (CN)
(72) Inventor: LIAO, Qunchao, Ningde, Fujian 352100 (CN); CUI, Hang, Ningde, Fujian 352100 (CN); XIE, Yuansen, Ningde, Fujian 352100 (CN)
(74) Representative: Klunker IP Patentanwälte PartG mbB
(86) International application number: PCT/CN2019/121735
(87) International publication number: WO 2021/102846

(57) **Abstract**

The present application relates to an anode, an electrochemical device and an electronic device comprising the anode. The anode of the present application comprises silicon-based particles and graphite particles, wherein the number of graphite particles present within a range of 0 to 6 µm in a vertical distance from the edge of the silicon-based particles is N; and based on the total number of the silicon-based particles, more than 50% of the silicon-based particles meet: 6≤N≤17. The anode of the present application has good cycle performance, and the battery prepared with the anode has better rate performance and lower deformation rate.

## Description

### BACKGROUND

### 1. Technical Field

The present application relates to the field of energy storage, and particularly to an anode, an electrochemical device and an electronic device comprising the anode, particularly lithium ion batteries.

### 2. Description of the Related Art

With the popularization of consumer electronic products, such as notebook computers, mobile phones, tablet computers, mobile power supplies, and unmanned aerial vehicles, the requirements for electrochemical devices used therein are becoming stricter. For example, a battery is not only required to be light in weight, but is also required to have high capacity and a relatively long service life. Lithium ion batteries have occupied a leading position in the market due to their outstanding advantages, such as high energy density, excellent safety, no memory effect and long service life.

### SUMMARY

Embodiments of the present application provide an anode material and a method for preparing the anode material, to solve at least one of the problems existing in related art to some extent. The embodiments of the present application also provide an anode using the anode material, an electrochemical device, and an electronic device.

In an embodiment, the present application provides an anode, which comprises silicon-based particles and graphite particles, wherein the number of graphite particles present within a range of about 0-6 µm in a vertical distance from the edge of the silicon-based particles is N; and based on the total number of the silicon-based particles, more than about 50% of the silicon-based particles meet: 6≤N≤17.

In another embodiment, the present application provides an electrochemical device, which comprises an anode according to an embodiment of the present application.

In another embodiment, the present application provides an electronic device, which comprises an electrochemical device according to an embodiment of the present application.

In the present application, starting from a reasonable match of the silicon-based material and the graphite material, the cycle performance and deformation rate of the battery are significantly improved, by limiting the number of graphite particles present around the silicon-based particles.

Additional aspects and advantages of the embodiments of the present application will be partly described or shown in the following description or interpreted by implementing the embodiments of the present application.

### BRIEF DESCRIPTION OF THE DRAWINGS

Drawings necessary to describe the embodiments of the present application or the prior art will be briefly illustrated so as to facilitate the description of the embodiments of the present application. Obviously, the accompanying drawings show only some of the embodiments of the present application. For those skilled in the art, the drawings of other embodiments can still be obtained according to the structures illustrated in the drawings without any creative effort.
Fig. 1A shows a scanning electron microscopy (SEM) image of silicon oxide SiOₓ in Example 1; Fig. 1B shows an SEM image of graphite particles in Example 1; and Figs. 1C and 1D show an SEM image of a portion of a cross section of an anode in Example 1 respectively.
Fig. 2A shows the particle size distribution curve of the silicon oxide SiOₓ in Example 1; and Fig. 2B shows the particle size distribution curve of the graphite in Example 1.
Fig. 3A shows the capacity attenuation curves of the lithium ion batteries in Example 1 and Comparative Example 1; Fig. 3B shows the deformation curves of the batteries in Example 1 and Comparative Example 1; Fig. 3C shows an X-ray diffraction (XRD) pattern of the anode active material in Example 10; and Fig. 3D shows an X-ray diffraction pattern of the anode active material in Comparative Example 4.
Fig. 4 illustrates a schematic structural diagram of the anode active material in an example of the present application.
Fig. 5 illustrates a schematic structural diagram of the anode active material in another example of the present application.

### DETAILED DESCRIPTION

The embodiments of the present application will be described in detail below. The embodiments of the present application should not be interpreted as limitations to the present application.

As used in the present application, the terms "about" is used for describing and explaining a small variation. When used in connection with an event or circumstance, the term may refer to an example in which the event or circumstance occurs precisely, and an example in which the event or circumstance occurs approximately. For example, when used in connection with a value, the term may refer to a range of variation less than or equal to ±10% of the stated value, such as less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%.

In the present application, Dv50 is the particle size corresponding to a cumulative volume percentage of the anode active material that is 50%, and the unit is µm.

In the present application, Dn10 is the particle size corresponding to a cumulative number percentage of the anode active material that is 10%, and the unit is µm.

In the present application, the silicon composite comprises elemental silicon, a silicon compound, a mixture of elemental silicon and a silicon compound, or a mixture of various silicides.

In the present application, the sphericity degree refers to the ratio of the shortest diameter to the longest diameter of a particle.

In the present application, the "capacity per gram of the anode" refers to the capacity per gram of the anode active material used to prepare the anode. For example, the anode active material in an embodiment of the present application is a mixture of graphite and a silicon-based anode active material, and then the "capacity per gram of the anode" refers to the capacity per gram of the mixture.

In addition, amounts, ratios, and other values are sometimes presented in a range format in this application. It is to be understood that such a range format is provided for the sake of convenience and simplicity, and should be understood flexibly to include not only the numerical values that are explicitly defined in the range, but also all the individual values or sub-ranges that are included in the range, as if each value and sub-range are explicitly specified.

In the detailed description and claims, a list of items connected by the term "one of" or the like means any one of the listed items. For example, if items A and B are listed, the phrase "one of A and B" means only A or only B. In another example, if items A, B, and C are listed, then the phrase "one of A, B, and C" means only A; only B; or only C. Item A may include a single or multiple elements. Item B may include a single or multiple elements. Item C may include a single or multiple elements.

In the detailed description and claims, a list of items connected by the term "at least one of" or the like means any combination of the listed items. For example, if items A and B are listed, the phrase "at least one of A and B" means only A; only B; or A and B. In another example, if items A, B, and C are listed, then the phrase "at least one of A, B, and C" means only A; only B; only C; A and B (excluding C); A and C (excluding B); B and C (excluding A); or A, B, and C. Item A may include a single or multiple elements. Item B may include a single or multiple elements. Item C may include a single or multiple elements.

### I. Anode

Embodiments of the present application provide an anode, which includes a current collector and an anode active material layer on the current collector.

In some embodiments, the anode active material layer comprises silicon-based particles and graphite particles, wherein the number of graphite particles present in a range of about 6 µm in a vertical distance from the edge of the silicon-based particles is N; and based on the total number of the silicon-based particles, more than about 50% of the silicon-based particles meet: 6≤N≤17.

In some embodiments, each of the N graphite particles is independently, wholly or partly located within a range of about 6 µm in a vertical distance from the edge of the silicon-based particles. In some embodiments, each of the N graphite particles is wholly located within a range of about 6 µm in a vertical distance from the edge of the silicon-based particles. In some embodiments, some of the N graphite particles are totally located within a range of about 6 µm in a vertical distance from the edge of the silicon-based particles, and only a portion of each of the other graphite particles is located within a range of about 6 µm in a vertical distance from the edge of the silicon-based particles.

In some embodiments, the silicon-based particles do not include particles with a minimum distance of less than about 6 µm from the edge thereof to the surfaces of the current collector and the anode.

In some embodiments, more than about 60% of the silicon-based particles meet: 6≤N≤17. In some embodiments, more than about 70% of the silicon-based particles meet: 6≤N≤17. In some embodiments, more than about 80% of the silicon-based particles meet: 6≤N≤17. In some embodiments, more than about 90% of the silicon-based particles meet: 6≤N≤17.

In some embodiments, in the X-ray diffraction pattern of the silicon-based particles, the highest intensity at 2θ within the range of about 28.0° to 29.0° is I₂, and the highest intensity at 2θ within the range of about 20.5° to 21.5° is I₁, wherein about 0<I₂/I₁≤ about 1.

In some embodiments, in the X-ray diffraction pattern of the silicon-based particles, the highest intensity at 2θ of about 28.4° is I₂, and the highest intensity at 2θ of about 21.0° is I₁, wherein about 0<I₂/I₁≤ about 1. In some embodiments, the I₂/I₁ value is about 0.3, about 0.5, about 0.7 or about 0.9.

In some embodiments, the Dᵥ50 of the silicon-based particles is from about 2.5 to 10 µm. In some embodiments, the Dᵥ50 of the silicon-based particles is about 4 to 8 µm. In some embodiments, the Dᵥ50 of the silicon-based particles is from about 4.5 to 6 µm.

In some embodiments, the silicon-based particles have a particle size distribution meeting: about 0.3≤Dn10/Dv50≤about 0.6. In some embodiments, the silicon-based particles have a particle size distribution meeting: about 0.4≤Dn10/Dv50≤about 0.5. In some embodiments, the silicon-based particles have a particle size distribution of about 0.35, about 0.45, or about 0.55.

In some embodiments, the silicon-based particles comprise a silicon composite substrate and an oxide MeO_{y} layer, wherein the oxide MeO_{y} layer is coated on at least a portion of the silicon composite substrate, wherein Me includes at least one of Al, Si, Ti, Mn, V, Cr, Co or Zr, and y is about 0.5 to 3; and wherein the oxide MeO_{y} layer comprises a carbon material.

In some embodiments, the oxide MeO_{y} includes Al₂O₃, TiO₂, ZrO, MnO, Mn₂O₃, Mn₃O₄, Co₃O₄, Cr₂O₃, SiO₂ or any combination thereof.

In some embodiments, the carbon material in the oxide MeO_{y} layer includes amorphous carbon, carbon nanotubes, carbon nanoparticles, carbon fibers, graphene, or any combination thereof. In some embodiments, the amorphous carbon is a carbon material obtained by sintering a carbon precursor at high temperature. In some embodiments, the carbon precursor includes polyvinylpyrrolidone, sodium carboxymethyl cellulose, polyvinyl alcohol, polypropylene, phenolic resin, polyester resin, polyamide resin, epoxy resin, polyurethane, polyacrylic resin or any combination thereof.

In some embodiments, the silicon-based particles further comprise a polymer layer, wherein the polymer layer is coated on at least a portion of the oxide MeOy layer, wherein the polymer layer comprises a carbon material. In some embodiments, the polymer layer can be directly coated on the surface of the silicon composite substrate. That is, the silicon-based particles only include the silicon composite substrate and the polymer layer.

In some embodiments, the polymer layer comprises polyvinylidene fluoride and its derivatives, carboxymethyl cellulose and its derivatives, sodium carboxymethyl cellulose and its derivatives, polyvinylpyrrolidone and its derivatives, polyacrylic acid and its derivatives, polystyrene-butadiene rubber, polyacrylamide, polyimide, polyamideimide or any combination thereof.

In some embodiments, the average sphericity degree of the graphite particles is A, and the average sphericity degree of the silicon-based particles is B. A and B meet: about 0 <B-A ≤ about 0.3.

In some embodiments, the value of B-A is about 0.1, about 0.15, about 0.17, about 0.19, about 0.21, about 0.23, about 0.26, or about 0.29.

In some embodiments, the silicon composite substrate comprises particles that can intercalate and deintercalate lithium ions. In some embodiments, the silicon composite substrate comprises a silicon-containing substance. The silicon-containing substance in the silicon composite substrate can form a composite with one or more of other substances than the silicon-containing substance in the anode material.

In some embodiments, the silicon composite substrate comprises SiOₓ, wherein about 0.6≤x≤about 1.5.

In some embodiments, the silicon composite substrate comprises nano-Si crystalline grains, SiO, SiO₂, or any combination thereof.

In some embodiments, the particle size of the nano-Si crystalline grains is less than about 100 nm. In some embodiments, the particle size of the nano-Si crystalline grains is less than about 50 nm. In some embodiments, the particle size of the nano-Si crystalline grains is less than about 20 nm. In some embodiments, the particle size of the nano-Si crystalline grains is less than about 5 nm. In some embodiments, the particle size of the nano-Si crystalline grains is less than about 2 nm.

In some embodiments, the thickness of the oxide MeO_{y} layer is about 0.5 nm to 1000 nm. In some embodiments, the thickness of the oxide MeO_{y} layer is about 1 nm to 500 nm. In some embodiments, the thickness of the oxide MeO_{y} layer is about 1 nm to 100 nm. In some embodiments, the thickness of the oxide MeO_{y} layer is about 1 nm to 20 nm. In some embodiments, the thickness of the oxide MeO_{y} layer is about 2 nm, about 10 nm, about 20 nm, or about 50 nm.

In some embodiments, based on the total weight of the silicon-based particles, the weight percentage of the Me element is about 0.005 to 1 wt%. In some embodiments, based on the total weight of the silicon-based particles, the weight percentage of the Me element is about 0.01 to 1 wt%. In some embodiments, based on the total weight of the silicon-based particles, the weight percentage of the Me element is about 0.02 to 0.9 wt%. In some embodiments, based on the total weight of the silicon-based particles, the weight percentage of the Me element is about 0.05 wt%, about 0.1 wt%, about 0.2 wt%, about 0.3 wt%, about 0.4 wt%, about 0.5 wt%, about 0.6 wt%, about 0.7 wt% or about 0.8 wt%.

In some embodiments, based on the total weight of the silicon-based particles, the weight percentage of the carbon material in the oxide MeO_{y} layer is about 0.01 to 1 wt%. In some embodiments, based on the total weight of the silicon-based particles, the weight percentage of the carbon material in the oxide MeO_{y} layer is about 0.1 to 0.9 wt%. In some embodiments, based on the total weight of the silicon-based particles, the weight percentage of the carbon material in the oxide MeO_{y} layer is about 0.2 to 0.8 wt%. In some embodiments, based on the total weight of the silicon-based particles, the weight percentage of the carbon material in the oxide MeO_{y} layer is about 0.3 wt%, about 0.4 wt%, about 0.5 wt%, about 0.6 wt%, or about 0.7 wt%.

In some embodiments, the carbon material in the polymer layer includes carbon nanotubes, carbon nanoparticles, carbon fibers, graphene, or any combination thereof.

In some embodiments, based on the total weight of the silicon-based particles, the weight percentage of the polymer layer is about 0.05 to 5 wt%. In some embodiments, based on the total weight of the silicon-based particles, the weight percentage of the polymer layer is about 0.1 to 4 wt%. In some embodiments, based on the total weight of the silicon-based particles, the weight percentage of the polymer layer is about 0.5 to 3 wt%. In some embodiments, based on the total weight of the silicon-based particles, the weight percentage of the polymer layer is about 1, about 1.5, or about 2 wt%.

In some embodiments, the thickness of the polymer layer is about 1 to 100 nm. In some embodiments, the thickness of the polymer layer is about 5 to 90 nm. In some embodiments, the thickness of the polymer layer is about 10 to 80 nm. In some embodiments, the thickness of the polymer layer is about 5 nm, about 20 nm, about 30 nm, about 40 nm, about 50 nm, about 60 nm or about 70 nm.

In some embodiments, the anode material has a specific surface area of about 1 to 50 m²/g. In some embodiments, the anode material has a specific surface area of about 5 to 40m²/g. In some embodiments, the anode material has a specific surface area of about 10 to 30m²/g. In some embodiments, the anode material has a specific surface area of about 1 m²/g, about 5 m²/g, or about 10 m²/g.

In some embodiments, the silicon-based particles have an average sphericity degree of about 0.8 to 1.0. In some embodiments, the silicon-based particles have an average sphericity degree of about 0.85, about 0.9 or about 0.95.

In some embodiments, the number of silicon-based particles having a sphericity degree of less than about 0.8 accounts for about 10% or less of the total number of the silicon-based particles. In some embodiments, the number of silicon-based particles having a sphericity degree of less than about 0.8 accounts for about 8% or less, about 7% or less, about 6% or less, or about 5% or less of the total number of the silicon-based particles.

In some embodiments, the graphite particles have an average sphericity degree of about 0.5 to 0.8. In some embodiments, the graphite particles have an average sphericity degree of about 0.55, about 0.6, about 0.65 or about 0.75.

In some embodiments, the number of graphite particles having a sphericity degree of about 0.5 to 0.8 accounts for about 95% or more of the total number of the graphite particles. In some embodiments, the number of graphite particles having a sphericity degree of about 0.5 to 0.8 accounts for about 96% or more, about 97% or more, or about 98% or more of the total number of the graphite particles.

In some embodiments, the graphite particles have a scattering peak I₁₃₃₀ at about 1330 cm⁻¹ and a scattering peak I₁₅₈₀ at about 1580 cm⁻¹ in Raman spectroscopy, wherein the I₁₃₃₀/I₁₅₈₀ ratio meets about 0.7<I₁₃₃₀/I₁₅₈₀< about 2.0.

In some embodiments, the I₁₃₃₀/I₁₅₈₀ ratio meets about 0.8<I₁₃₃₀/I₁₅₈₀<about 1.8. In some embodiments, the I₁₃₃₀/I₁₅₈₀ ratio meets about 1<I₁₃₃₀/I₁₅₈₀<about 1.5.

In some embodiments, the graphite particles have a particle size Dv50 of about 0.01 to 80 µm. In some embodiments, the graphite particles have a particle size Dv50 of about 1 to 70 µm. In some embodiments, the graphite particles have a particle size Dv50 of about 5 to 60 µm. In some embodiments, the graphite particles have a particle size Dv50 of about 10-50 µm. In some embodiments, the graphite particles have a particle size Dv50 of about 15 µm, about 20 µm, about 25 µm, about 30 µm, about 35 µm, about 40 µm or about 45 µm.

In some embodiments, the graphite particles have a specific surface area of about 30 m²/g or less. In some embodiments, the graphite particles have a specific surface area of about 25 m²/g or less. In some embodiments, the graphite particles have a specific surface area of about 20 m²/g or less. In some embodiments, the graphite particles have a specific surface area of about 15 m²/g or less.

In some embodiments, the X-ray diffraction pattern of the graphite particles includes a 004 diffraction line profile and a 110 diffraction line profile. The c-axis length C004 of the unit cell can be obtained from the 004 diffraction line profile, and the a-axis length C110 of the unit cell can be obtained from the 110 diffraction line profile. The ratio C004/C110 is the orientation index (OI) of the graphite particles, and the OI value of the graphite particles is about 1 to 30.

In some embodiments, the graphite particles have an OI value of about 1 to 20. In some embodiments, the graphite particles have an OI value of about 5, about 10, or about 15.

In some embodiments, the method for preparing the silicon-based particles meeting about 0<I₂/I₁≤ about 1 comprises:
(1) mixing silicon dioxide and metal silicon powder at a molar ratio of about 1: 5-5: 1 to obtain a mixed material;
(2) heating the mixed material at a temperature range of about 1100 to 1550°C under about 10⁻⁴ to 10⁻¹ kPa for about 0.5 to 24 hr to obtain a gas;
(3) condensing the gas obtained to obtain a solid;
(4) crushing and screening the solid to obtain silicon-based particles; and
(5) heat-treating the solid at a temperature range of about 400 to 1200°C for about 1 to 24 hr, and cooling the heat-treated solid to obtain the silicon-based particles.

In some embodiments, the molar ratio of silicon dioxide to the metal silicon powder is about 1:4 to 4:1. In some embodiments, the molar ratio of silicon dioxide to the metal silicon powder is about 1:3 to 3:1. In some embodiments, the molar ratio of silicon dioxide to the metal silicon powder is about 1:2 to 2:1. In some embodiments, the molar ratio of silicon dioxide to the metal silicon powder is about 1:1.

In some embodiments, the pressure is in the range of about 10⁻⁴ to 10⁻¹ kPa. In some embodiments, the pressure is about 1 Pa, about 10 Pa, about 20 Pa, about 30 Pa, about 40 Pa, about 50 Pa, about 60 Pa, about 70 Pa, about 80 Pa, about 90 Pa or about 100 Pa.

In some embodiments, the heating temperature is about 1100 to 1450°C. In some embodiments, the heating temperature is about 1200°C or about 1400°C.

In some embodiments, the heating temperature is about 1 to 20 hr. In some embodiments, the heating temperature is about 5 to 15 hr. In some embodiments, the heating time is about 2, about 4, about 6, about 8, about 10, about 12, about 14, about 16 or about 18 hr.

In some embodiments, the mixing is performed in a ball mill, a V-type mixer, a three-dimensional mixer, an airflow mixer or a horizontal mixer.

In some embodiments, the heating is carried out under an inert gas atmosphere. In some embodiments, the inert gas includes nitrogen, argon, helium or a combination thereof.

In some embodiments, the thermal treatment temperature is about 400-1200°C. In some embodiments, the thermal treatment temperature is about 600°C, about 800°C, or about 1000°C.

In some embodiments, the heat-treatment time is about 1 to 24 hr. In some embodiments, the heat-treatment time is about 2 to 12 hr. In some embodiments, the heat-treatment time is about 5, about 10 or about 15 hr.

In some embodiments, the method for preparing the silicon-based particles having an oxide MeO_{y} layer on the surface comprises:
(1) forming the graded solid or a commercial silicon oxide SiOₓ, a carbon precursor and an oxide precursor MeTₙ into a mixed solution in the presence of an organic solvent and deionized water;
(2) drying the mixed solution to obtain powder; and
(3) sintering the powder at about 250 to 900°C for about 0.5 to 24 hr, to obtain silicon-based particles with an oxide MeO_{y} layer on the surface,
   wherein x is about 0.5 to 1.5; and
   y is about 0.5 to 3,
   wherein Me includes at least one of Al, Si, Ti, Mn, Cr, V, Co or Zr,
   wherein T includes at least one of methoxy, ethoxy, isopropoxy or halogen, and
   wherein n is 1, 2, 3 or 4.

In some embodiments, the oxide precursor MeTₙ includes isopropyl titanate, aluminum isopropoxide, or a combination thereof.

In some embodiments, the carbon material includes amorphous carbon, carbon nanotubes, carbon nanoparticles, carbon fibers, graphene, or any combination thereof. In some embodiments, the amorphous carbon is a carbon material obtained by sintering a carbon precursor at high temperature. In some embodiments, the carbon precursor includes polyvinylpyrrolidone, sodium carboxymethyl cellulose, polyvinyl alcohol, polypropylene, phenolic resin, polyester resin, polyamide resin, epoxy resin, polyurethane, polyacrylic resin or any combination thereof.

In some embodiments, the sintering temperature is about 300 to 800°C. In some embodiments, the sintering temperature is about 400 to 700°C. In some embodiments, the sintering temperature is about 400 to 650°C. In some embodiments, the sintering temperature is about 500 or about 600°C.

In some embodiments, the sintering time is about 1 to 20 hr. In some embodiments, the sintering time is about 1 to 15 hr. In some embodiments, the sintering time is about 1-10 hr. In some embodiments, the sintering time is about 1.5 to 5 hr. In some embodiments, the sintering time is about 2, about 3, or about 4 hr.

In some embodiments, the organic solvent includes at least one of ethanol, methanol, n-hexane, N, N-dimethylformamide, pyrrolidone, acetone, toluene, isopropanol or n-propanol. In some embodiments, the organic solvent is ethanol.

In some embodiments, the halogen includes F, Cl, Br, or a combination thereof.

In some embodiments, the sintering is carried out under an inert gas atmosphere. In some embodiments, the inert gas includes nitrogen, argon, or a combination thereof.

In some embodiments, the drying is spray drying at a temperature of about 100 to 300°C.

In some embodiments, the method for preparing the silicon-based particles having a polymer layer on the surface comprises:
(1) dispersing the above-mentioned crushed and screened solid, a commercial silicon oxide SiOₓ, or the silicon-based particles with an oxide MeO_{y} layer on the surface, a carbon material and a polymer in a solvent at high speed for about 1 to 15 hr to obtain a suspension liquid; and
(2) removing the solvent from the suspension liquid,
wherein x is about 0.5 to 1.5.

In some embodiments, the dispersing time is about 2, about 4, about 6, about 8, or about 10 hr.

In some embodiments, the polymer comprises polyvinylidene fluoride and its derivatives, carboxymethyl cellulose and its derivatives, sodium carboxymethyl cellulose and its derivatives, polyvinylpyrrolidone and its derivatives, polyacrylic acid and its derivatives, polystyrene-butadiene rubber, polyacrylamide, polyimide, polyamideimide or any combination thereof.

In some embodiments, the carbon material includes carbon nanotubes, carbon nanoparticles, carbon fibers, graphene, or any combination thereof.

In some embodiments, the solvent includes water, ethanol, methanol, tetrahydrofuran, acetone, chloroform, N-methylpyrrolidone, dimethylformamide, dimethylacetamide, toluene, xylene or any combination thereof.

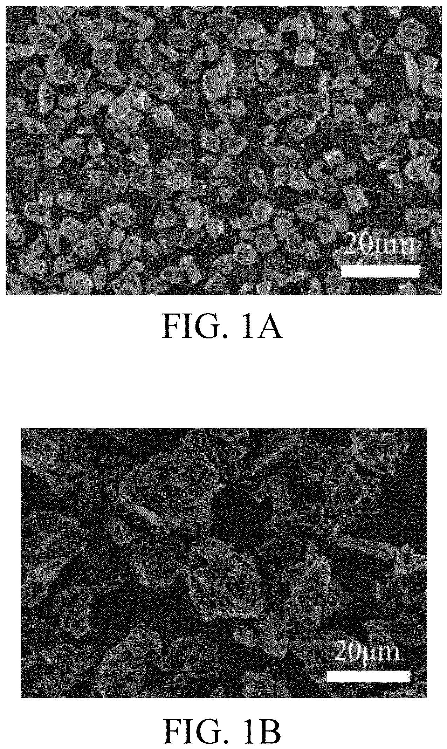

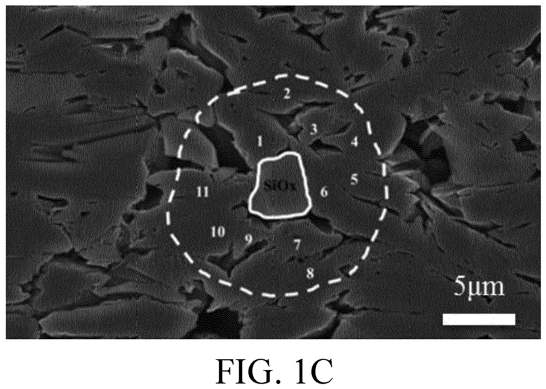

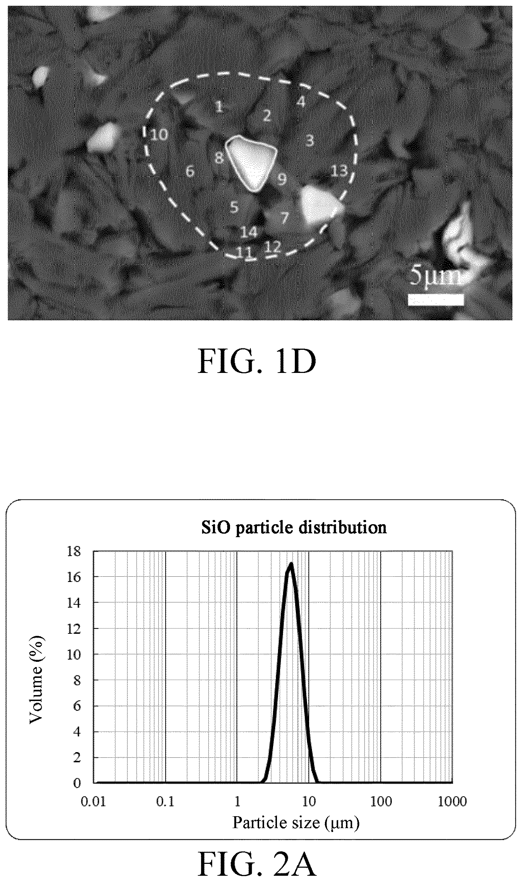

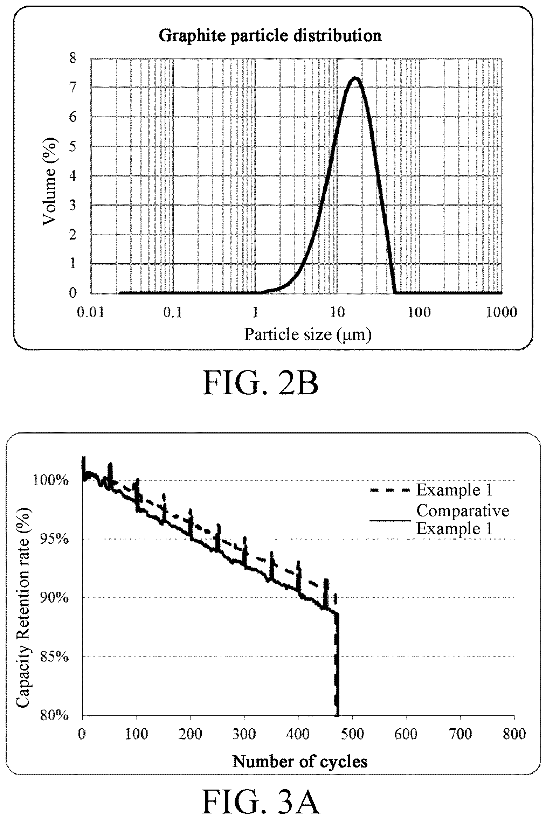

Fig. 1A shows an SEM image of a silicon oxide SiOₓ in Example 1; Fig. 1B shows an SEM image of graphite particles in Example 1; and Figs. 1C and 1D show an SEM image of a portion of a cross section of an anode in Example 1 respectively. Fig. 2A shows the particle size distribution curve of the silicon oxide SiOx in Example 1; and Fig. 2B shows the particle size distribution curve of graphite in Example 1.

It can be seen from Fig. 1C that the number of graphite particles present within a range of about 6 µm in a vertical distance from the edge of one silicon-based particle is 11. It can be seen from Fig. 1D that the number of graphite particles present within a range of about 6 µm in a vertical distance from the edge of another silicon-based particle is 14.

In industry, a silicon oxide material and a graphite material are usually mixed at a certain ratio to prepare an anode. Persons skilled in the art usually and only focus on improving the silicon oxide material to improve the performance of the anode, but ignore the influence of a reasonable match of the silicon oxide particles and the graphite particles on the performance of the anode. The silicon oxide particles and the graphite particles have different volume swelling during lithium intercalation. It is found in the present application that by reasonably matching the silicon oxide particles and the graphite particles in the anode, the overall swelling stress of the anode can be evenly dispersed, and the silicon oxide particles are filled in the gap between the graphite particles, such that the silicon oxide particles and the graphite particles interlock with each other like gears, thereby increasing the compaction density of the anode, inhibiting the displacement of particles due to swelling, reducing the deformation of the anode, and increasing the cycle life of the battery. Therefore, the reasonable match of the silicon oxide particles and the graphite particles has great significance for improving the performance of the battery.

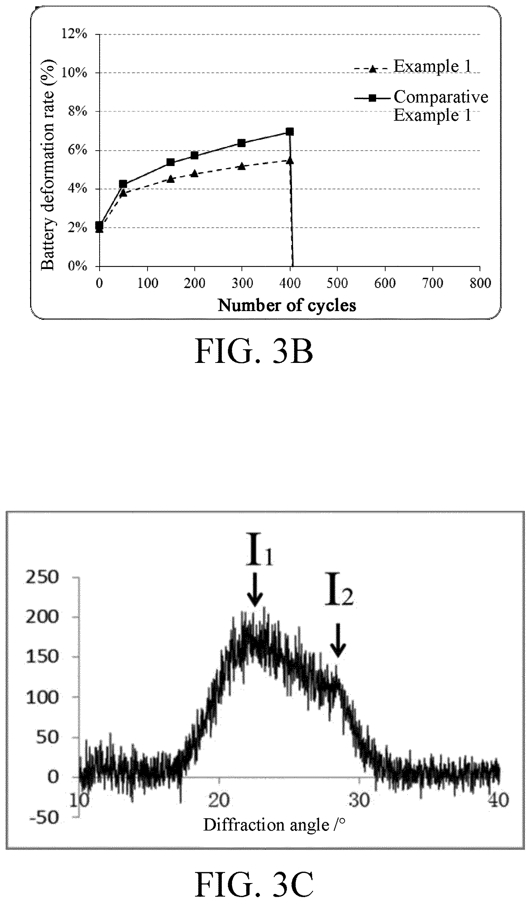

Fig. 3A shows the capacity attenuation curves of the lithium ion batteries in Example 1 and Comparative Example 1; and Fig. 3B shows the deformation curves of the lithium ion batteries in Example 1 and Comparative Example 1.

As can be seen from Fig. 3A, the capacity retention rate in Example 1 is higher than that in Comparative Example 1. As can be seen from Fig. 3B, the deformation rate of the battery in Example 1 is lower than the deformation rate of the battery in Comparative Example 1.

Fig. 3C shows an X-ray diffraction (XRD) pattern of an anode active material in Example 10 of the present application. As can be seen from Fig. 3C, in the X-ray diffraction pattern of the anode active material, the highest intensity at 2θ within the range of about 28.0° to 29.0° is I₂, and the highest intensity at 2θ within the range of about 20.5° to 21.5° is I₁, wherein about 0<<I₂/I₁≤ about 1. The I₂/I₁ value reflects the influence degree of disproportionation to the material. The larger the I₂/I₁ value is, the larger the size of the nano-silicon crystalline grains inside the anode active material will be. When the I₂/I₁ value is greater than 1, the stress in a local region of the anode active material will sharply increase during intercalation of lithium, so that the structure of the anode active material is degraded during the cycle process. In addition, due to the generation of the distribution of nanocrystals, the diffusion capacity of the ions in the grain boundaryduring diffusion of the ions will be affected. The inventors of the present application finds that when the I₂/I₁ value meets 0<I₂/I₁≤1, the anode active material has good cycle performance, and the lithium ion battery prepared with the same has good swelling resistance.

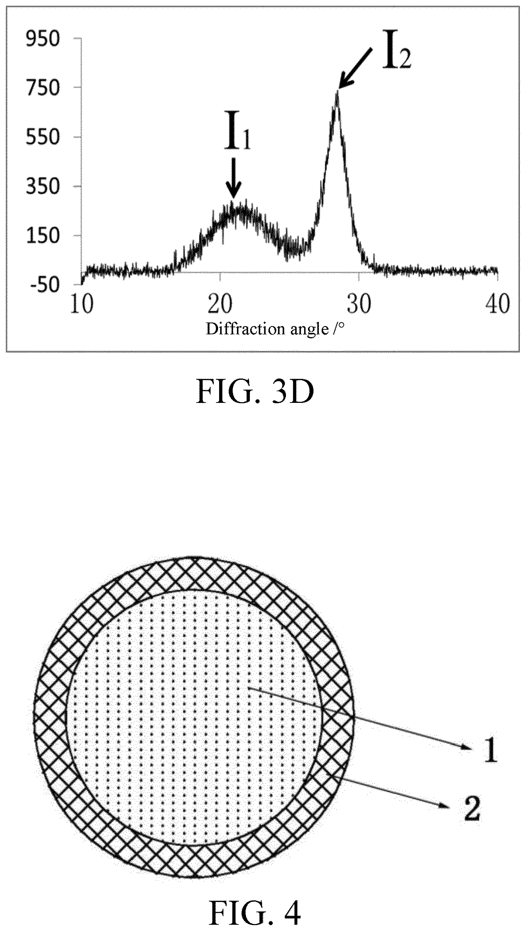

Fig. 3D shows an X-ray diffraction (XRD) pattern of an anode active material in Comparative Example 4 of the present application. It can be seen from Fig. 3D that the anode active material of Comparative Example 4 has an I₂/I₁ value that is significantly greater than 1. Compared with the anode active material of Example 1, the anode active material of Comparative Example 4 has poor cycle performance, and the lithium ion battery prepared therewith has a high swelling rate and poor rate performance.

Fig. 4 illustrates a schematic structural diagram of an anode active material in an example of the present application. The inner layer 1 is a silicon composite substrate, and the outer layer 2 is anoxide MeO_{y} layer containing a carbon material.

The oxide MeO_{y} layer coating the silicon composite substrate can act as an HF trapping agent, and the oxide can react with HF in the electrolytic solution to reduce the content of HF in the electrolytic solution during the cycle, and reduce the etching of HF on the surface of the silicon material, thereby further improving the cycle performance of the material. Doping a certain amount of carbon in the oxide MeO_{y} layer can enhance the conductivity of the anode active material, and reduce the polarization during the cycle.

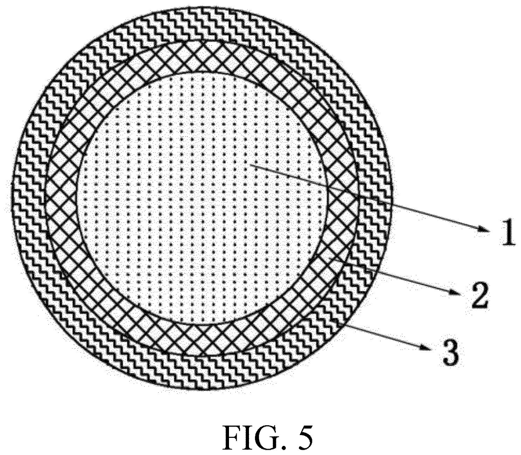

Fig. 5 illustrates a schematic structural diagram of an anode active material in another example of the present application. The inner layer 1 is a silicon composite substrate, the middle layer 2 is an oxide MeO_{y} layer containing a carbon material, and the outer layer 3 is a polymer layer containing a carbon material. The anode active material of the present application may only have the silicon composite substrate and the polymer layer, but is free of MeO_{y} layer. That is, the polymer layer of the present application can be directly coated on the surface of the silicon composite substrate.

When a polymer layer containing carbon nanotubes (CNT) is coated on the surface of the anode active material, the CNTs can be bound to the surface of the anode active material by the polymer, which is beneficial for the improvement of the interface stability on the surface of the anode active material and constrains the migration of the silicon-based particles, thereby improving the cycle performance and reducing the deformation.

In some embodiments, the anode active material layer comprises a binder. In some embodiments, the binder includes, but is not limited to, polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-vinylidene fluoride), polyethylene, polypropylene, styrene-butadiene rubber, acrylic styrene butadiene rubber, epoxy resin, Nylon and so on.

In some embodiments, the anode active material layer comprises a conductive material. In some embodiments, the conductive material includes, but is not limited to, natural graphite; artificial graphite; carbon black; acetylene black; Ketjen black; carbon fibers; a metal powder; metal fibers; copper; nickel; aluminum; silver; or polyphenylene derivatives.

In some embodiments, the current collector includes, but is not limited to, a copper foil, a nickel foil, a stainless steel foil, a titanium foil, foamed nickel, foamed copper, or a polymeric substrate coated with a conductive metal.

In some embodiments, the anode can be obtained by mixing an active material, a conductive material, and a binder in a solvent to prepare an active material composition, and coating the active material composition on a current collector.

In some embodiments, the solvent may include, but is not limited to, N-methylpyrrolidone or the like.

### II. Cathode

A material capable of being applied to a cathode in the embodiment of the present application, a composition and a preparation method thereof include any technology disclosed in prior art. In some embodiments, the cathode is a cathode disclosed in US Patent Application US9812739B, which is incorporated into the present application by full text reference.

In some embodiments, the cathode includes a current collector and a cathode active material layer on the current collector.

In some embodiments, the cathode active material includes, but is not limited to, lithium cobalt oxide (LiCoO2), lithium nickel cobalt manganese (NCM) ternary material, lithium iron phosphate (LiFePO4), or lithium manganese oxide (LiMn2O4).

In some embodiments, the cathode active material layer further comprises a binder, and optionally a conductive material. The binder improves the binding of the cathode active material particles to each other and the binding of the cathode active material to the current collector.

In some embodiments, the binder includes, but is not limited to, polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-vinylidene fluoride), polyethylene, polypropylene, styrene-butadiene rubber, acrylated styrene-butadiene rubber, epoxy resins, Nylon and so on.

In some embodiments, the conductive material includes, but is not limited to, a carbon based material, a metal based material, a conductive polymer, and a mixture thereof. In some embodiments, the carbon-based material is selected from natural graphite, artificial graphite, carbon black, acetylene black, Ketjen black, carbon fiber, or any combinations thereof. In some embodiments, the metal based material is selected from metal powders, metal fibers, copper, nickel, aluminum, and silver. In some embodiments, the conductive polymer is a polyphenylene derivative.

In some embodiments, the current collector includes, but is not limited to, aluminum.

The cathode may be prepared by a preparation method well known in the art. For example, the cathode can be obtained by the following method: mixing an active material, a conductive material and a binder in a solvent to prepare an active material composition, and coating the active material composition on a current collector. In some embodiments, the solvent may include, but is not limited to, N-methylpyrrolidone or the like.

### III. Electrolytic solution

The electrolytic solution useful in the embodiments of the present application may be any electrolytic solution known in prior art.

In some embodiments, the electrolytic solution comprises an organic solvent, a lithium salt, and an additive. The organic solvent used in the electrolytic solution according to the present application may be any organic solvent known in the art and capable of serving as a solvent for an electrolytic solution. The electrolyte used in the electrolytic solution according to the present application is not limited, and may be any electrolyte known in the art. The additive used in the electrolytic solution according to the present application may be any additive known in the art and capable of serving as an additive for an electrolytic solution.

In some embodiments, the organic solvent includes, but is not limited to, ethylene carbonate (EC), propylene carbonate (PC), diethyl carbonate (DEC), ethyl methyl carbonate (EMC), dimethyl carbonate (DMC), propylene carbonate or ethyl propionate.

In some embodiments, the lithium salt includes at least one of an organic lithium salt or an inorganic lithium salt.

In some embodiments, the lithium salt includes, but is not limited to, lithium hexafluorophosphate (LiPF₆), lithium tetrafluoroborate (LiBF₄), lithium difluorophosphate (LiPO₂F₂), lithium bis(trifluoromethanesulfonyl)imide LiN(CF₃SO₂)₂ (LiTFSI), lithium bis(fluorosulfonyl)imide Li(N(SO₂F)₂ (LiFSI), lithium bis(oxalato)borate LiB(C₂O₄)₂ (LiBOB), or lithium difluoro(oxalato)borate LiBF₂(C₂O₄) (LiDFOB).

In some embodiments, the concentration of the lithium salt in the electrolyticsolution is about 0.5 to 3 mol/L, about 0.5 to 2 mol/L, or about 0.8 to 1.5 mol/L.

### IV. Separator

In some embodiments, a separator is disposed between the cathode and the anode to prevent a short circuit. The material and shape of the separator that can be used in the embodiments of the present application are not particularly limited, and may be any technology disclosed in prior art. In some embodiments, the separator includes a polymer or an inorganic substance formed by a material stable in the electrolytic solution of the present application.

For example, the separator may include a substrate layer and a surface treatment layer. The substrate layer is a non-woven fabric, a film, or a composite film having a porous structure. The material of the substrate layer is selected from at least one of polyethylene, polypropylene, polyethylene terephthalate, and polyimide. Specifically, a porous polypropylene film, a porous polyethylene film, a polypropylene non-woven fabric, a polyethylene nonwoven fabric, or a porous polypropylene-polyethylene-polypropylene composite film may be used.

The surface treatment layer is disposed on at least one surface of the substrate layer. The surface treatment layer may be a polymer layer or an inorganic substance layer, or a layer formed by mixing the polymer and the inorganic substance.

The inorganic substance layer includes inorganic particles and a binder. The inorganic particles are one or a combination of several selected from the group consisting of aluminum oxide, silicon oxide, magnesium oxide, titanium oxide, hafnium dioxide, tin oxide, cerium oxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is one or a combination of several selected from the group consisting of polyvinylidene fluoride, a vinylidene fluoride-hexafluoropropylene copolymer, polyamide, polyacrylonitrile, polyacrylic ester, polyacrylic acid, polyacrylate, polyvinylpyrrolidone, polyvinyl ether, polymethyl methacrylate, polytetrafluoroethylene and polyhexafluoropropylene.

The polymer layer includes a polymer, and the material of the polymer is selected from at least one of a polyamide, polyacrylonitrile, an acrylate polymer, polyacrylic acid, polyacrylate, polyvinylpyrrolidone, polyvinyl ether, polyvinylidene fluoride or poly(vinylidene fluoride-hexafluoropropylene).

### V. Electrochemical device

The embodiments of the present application provide an electrochemical device including any device that undergoes an electrochemical reaction.

In some embodiments, the electrochemical device of the present application includes a cathode having a cathode active material capable of occluding and releasing metal ions; an anode according to the embodiments of the present application; an electrolytic solution; and a separator disposed between the cathode and the anode.

In some embodiments, the electrochemical device of the present application includes, but is not limited to, all types of primary batteries, secondary batteries, fuel cells, solar cells, or capacitors.

In some embodiments, the electrochemical device is a lithium secondary battery.

In some embodiments, the lithium secondary battery includes, but is not limited to, a lithium metal secondary battery, a lithium ion secondary battery, a lithium polymer secondary battery or a lithium ion polymer secondary battery.

### VI. Electronic device

The electronic device of the present application may be any device using the electrochemical device according to the embodiments of the present application.

In some embodiments, the electronic device includes, but is not limited to, a notebook computer, a pen input computer, a mobile computer, an e-book player, a portable phone, a portable fax machine, a portable copy machine, a portable printer, a stereo headphone, a video recorder, a liquid crystal display television, a portable cleaner, a portable CD player, a minidisc player, a transceiver, an electronic notebook, a calculator, a memory card, a portable recorder, a radio, a backup power supply, a motor, a car, a motorcycle, a power-assisted bicycle, a bicycle, a lighting fixture, a toy, a game console, a clock, an electric tool, a flash light, a camera, a large household storage battery, or a lithium ion capacitor, and the like.

The lithium ion battery is taken as an example and the preparation of the lithium ion battery is described in conjunction with specific embodiments. Those skilled in the art would understand that the preparation methods described in the present application is only an example, and any other suitable preparation methods are within the scope of the present application.

### Embodiment

The following describes embodiments of the lithium-ion battery according to the present application and comparative examples for performance evaluation.

### I. Performance evaluation method for anode active materials

### 1. Test method for powder properties of anode active materials

(1) Microscopic morphology observation of powder particles:
   The microscopic morphology of powder was observed by scanning electron microscopy to characterize the coating on the surface of the material. The test instrument was an OXFORD EDS (X-max-20mm²), the acceleration voltage was 15 kV, the focal length was adjusted, the observation was made at 50K high magnification, and the agglomeration condition of the particles was observed at a low magnification of 500 to 2000.
(2) Average sphericity degree test:
   The images of a certain number (more than 5000) of dispersed particles were captured and processed by the Malvern automatic image particle size analyzer, and then the microstructure and morphology of the particles were accurately analyzed by morphologically-directed Raman spectroscopy (MDRS), to obtain the longest diameter and shortest diameter of all particles. The ratio of the shortest diameter to longest diameter of each particle was calculated to obtain the sphericity degree of each particle, and the sphericity degrees of all particles were averaged to obtain the average sphericity degree.
(3) Specific surface area test:
   At a constant low temperature, after the adsorption amounts of gas on a solid surface at different relative pressures were measured, the adsorption amount of a monomolecular layer of a test sample was obtained based on the Brunauer-Emmett-Teller adsorption theory and its formula (BET formula), thereby calculating the specific surface area of the solid.
   About 1.5 to 3.5 g of a powder sample was loaded into a test sample tube of a TriStar II 3020, and then was degassed at about 200°C for 120 min, and then tested.
(4) Particle size test:
   About 0.02 g of the powder sample was added to a 50 mL clean beaker, about 20 mL of deionized water was added, and then a few drops of 1% surfactant was added to disperse the powder completely in water. Performing an ultrasonic treatment for 5 min in a 120 W ultrasonic cleaning machine, the particle size distribution was then measured by a MasterSizer 2000.
(5) Carbon content test:
   The sample was heated and burned in a high-frequency furnace at a high temperature under an oxygen-enriched atmosphere to oxidize carbon and sulfur into carbon dioxide and sulfur dioxide, respectively. The gas was allowed to enter a corresponding absorption tank after treatment, and the corresponding infrared radiation was absorbed and converted into a corresponding signal by the detector. This signal was sampled by a computer, and converted into a value proportional to the concentration of carbon dioxide and sulfur dioxide after linear correction, and then the values throughout the entire analysis process were accumulated. After the analysis was completed, the accumulated value was divided by the weight in the computer, and then multiplied by the correction coefficient, and the blank was subtracted, to obtain the percentage weight percentage of carbon and sulfur in the sample. The sample was tested using a Shanghai Dekai HCS-140 high-frequency infrared carbon-sulfur analyzer.
(6) XRD test:
   1.0 to 2.0 g of the sample was added to a groove of a glass sample holder, compacted and flattened with a glass sheet, and tested using a Brook D8 X-ray diffractometer according to JJS K 0131-1996 "General rules for X-ray diffraction analysis". The test voltage was 40 kV, the current was 30 mA, the scanning angle was in the range of 10-85°, the scanning step size was 0.0167°, and the time for each step was 0.24s. An XRD pattern was obtained, from which the highest intensity I₂ at 2θ of 28.4° and the highest intensity I₁ at 2θ of 21.0° were obtained, and the ratio of I₂/ I₁ was calculated.
(7) Metal element test:
   A certain amount of the sample was weighed, added with an amount of concentrated nitric acid, and digested under microwave to obtain a solution. The obtained solution and filter residue were washed multiple times and diluted to a certain volume. The plasma intensities of the metal elements were tested by ICP-OES, the metal contents in the solution were calculated according to the standard curves of the tested metals, and then the amounts of the metal elements contained in the material were calculated.
(8) Anode porosity test:
   The anode was cut into a disc with a diameter of 13 mm by a punching machine, and the thickness of the disc was measured by a ten thousandth micrometer. A certain number of discs were put into a sample compartment of the AccuPyc 1340 instrument, and purged 30 times with helium. Then, helium was introduced according to program. The pressure in the sample compartment was tested, and the true volume in the sample compartment was calculated according to Boyle's Law PV = nRT. After the test, the discs were counted and the apparent volume of the samples was calculated. The porosity of the sample was calculated by the formula: 1-true volume/apparent volume.
(9) Test method of the compaction density of the anode:
   Discs having an area of S were cut from the anode by a punching machine, and weighed to record a weight M₁. The thickness H₁ was measured by a ten thousandth micrometer. Discs having the same area were cut from the current collector by the same punching machine, and weighed to record a weight M₂. The compaction density of the anode is: (M₁-M₂)/(H₁-H₂)/S.
(10) Test method of the percentage of silicon-based particles from the edge of which the number N of graphite particles present within a range of 0 to 6 µm in a vertical distance (hereinafter referred to as the number of graphite particles around the silicon-based particles) is 6 to 17:
   The cross section of the anode was polished with Ar particles, and then at least 30 silicon-based particles were photographed at a time by SEM from the silicon-based particles with a minimum distance of about 6 µm or more from the edge of the silicon-based particles to the surface of the current collector and the anode. The number N of graphite particles present within a range of about 0 to 6 µm in a vertical distance from the edge of the at least 30 silicon-based particles were recorded. The number of graphite particles here refers to the number of separated graphite particle, i.e., the number of primary graphite particles. If the graphite particles form an agglomerate, the calculated number of graphite particles was the number of separated graphite particle in the agglomerate that meet the above requirements, rather than regarding the agglomerate as a single particle.

The percentage of the silicon-based particles meeting the condition that N is 6-17 accounting for the at least 30 silicon-based particles was calculated. If the number of silicon-based particles in the area observed is less than 30, another area may be photographed. The N graphite particles may each be totally located within a range of about 0-6 µm in a vertical distance from the edge of the at least 30 silicon-based particles, or each of some graphite particles is totally located within the above range, and each of the other graphite particles is partly located within the above range.

The weight percentage of each substance in the following tables was calculated based on the total weight of the anode active material.

### II. Test method of electrical properties of anode active material

### 1. Test method for button battery

Under a dry argon atmosphere, LiPF₆ was added to a mixed solvent of propylene carbonate (PC), ethylene carbonate (EC), and diethyl carbonate (DEC) (at a weight ratio of about 1:1:1), and then uniformly mixed, wherein the concentration of LiPF₆ was about 1.15 mol/L. About 7.5 wt% of fluoroethylene carbonate (FEC) was added, and mixed uniformly to obtain an electrolytic solution.

The anode active material obtained in the examples and comparative examples, conductive carbon black and a modified polyacrylic acid (PAA) binder were added to deionized water at a weight ratio of about 80:10:10, and were stirred to form a slurry. A scraper was used for coating to form a coating layer with a thickness of 100 µm. The coating layer was dried in a vacuum drying oven at about 85°C for about 12 hr, cut into a wafer with a diameter of about 1 cm with a stamping machine in a dry environment. In a glove box, a lithium metal sheet was used as a counter electrode, and a Celgard composite membrane was used as a separator, and an electrolytic solution was added to assemble a button battery. A LAND series battery test was used to perform charge and discharge tests on the battery to test the charge and discharge capacity of the battery.

The cell was discharged to 0.005 V at 0.05 C, allowed to stand for 5 min, discharged to 0.005 V at 50 µA, allowed to stand for another 5 min, and discharged to 0.005 V at 10 µA, to obtain the first lithium-intercalation capacity of the material. Then, the cell was charged to 2 V at 0.1 C, to obtain the first lithium-deintercalation capacity. Finally, the first lithium deintercalation capacity was divided by the first lithium intercalation capacity to obtain the first efficiency of the material.

### 2. Whole battery test

### (1) Preparation of the lithium-ion battery

### Preparation of the cathode:

LiCoO₂, conductive carbon black and polyvinylidene fluoride (PVDF) were fully stirred and mixed in an N-methylpyrrolidone solvent system at a weight ratio of about 95%:2.5%:2.5%, to prepare a cathode slurry. The cathode slurry prepared was coated on an aluminum foil as a cathode current collector, dried, and then cold-pressed to obtain the cathode.

### Preparation of the anode:

Graphite, the silicon-based anode active material prepared according to the examples and comparative examples, a conductive agent (conductive carbon black, Super P^{®}), and the PAA binder were mixed at a weight ratio of about 95%:1.2%:5%:3.8%, an appropriate amount of water was added, and kneaded at a solid weight percentage of about 30 -60 wt%. An appropriate amount of water was added to adjust the viscosity of the slurry to about 2000-3000 Pa·s, to prepare an anode slurry.

The anode slurry prepared was coated on a copper foil as an anode current collector, dried, and then cold-pressed to obtain the anode.

### Preparation of the electrolytic solution

Under a dry argon atmosphere, LiPF₆ was added to a mixed solvent of propylene carbonate (PC), ethylene carbonate (EC), and diethyl carbonate (DEC) (at a weight ratio of about 1:1:1), and uniformly mixed, wherein the concentration of LiPF₆ was about 1.15 mol/L. About 7.5 wt% of fluoroethylene carbonate (FEC) was added, and uniformly mixed to obtain an electrolytic solution.

### Preparation of the separator

A porous PE polymer film was used as a separator.

### Preparation of the lithium-ion battery

The cathode, separator, and anode were stacked in an order such that the separator was located between the cathode and anode to isolate the cathode and anode, and a battery cell was obtained by winding. The battery was placed in an outer package, and the electrolytic solution was injected, and the outer package was packaged. After formation, degassing, trimming and other processes, the lithium ion battery was obtained.

### (2) Cycle performance test:

The test temperature was 25/45°C. The battery was charged to 4.4 V at a constant current of 0.7 C and then charged to 0.025 C at a constant voltage, allowed to stand for 5 min, and discharged to 3.0 V at 0.5 C. The capacity obtained in this step was the initial capacity. The cycle of charge at 0.7 C/discharge at 0.5 C was repeated, and ratio of the capacity of each step to the initial capacity was obtained, from which a capacity attenuation curve was obtained. The cycle number of at 25°C to a capacity retention rate of 90% was recorded as the roomtemperature cycle performance of the battery, and the cycle number of at 45°C to a capacity retention rate of 80% was recorded as the high-temperature cycle performance of the battery.

The cycle performances of the materials were compared by comparing the cycle number in the above two conditions.

### (3) Discharge rate test:

At 25°C, the battery was discharged to 3.0 V at 0.2 C, allowed to stand for 5 min, charged to 4.45 V at 0.5 C, charged to 0.05 C at a constant voltage, and allowed to stand for 5 min. The discharge rate was adjusted, and the battery was respectively discharged at 0.2 C, 0.5 C, 1C, 1.5 C, and 2.0 C, to obtain the discharge capacity. The capacity obtained at each rate and the capacity obtained at 0.2 C were compared. The rate performance was compared by comparing the ratios at 2 C and 0.2 C.

### (4) Deformation rate test of the battery after full charge

The thickness of a fresh battery of half charge (50% state of charge (SOC)) was measured by a micrometer screw. After 400 cycles, the thickness of the battery of full charge (100% SOC) was measured again by a micrometer screw, and compared with the thickness of the initial fresh battery of half charge (50% SOC), to obtain the deformation rate of the fully charged (100% SOC) battery at this time.

### III. Composition and performance test result of the anode

1. A commercial silicon oxide SiOₓ (0.5<x<1.5, Dv50= about 5.3 µm) and graphite particles were selected as the anode active material, with which the anodes of Examples 1 to 3 and Comparative Example 1 were prepared according to the above method.
Table 1-1 shows the compositions of the anodes in Examples 1 to 3 and Comparative Example 1.

**Table 1-1**

| No. | Number N of graphite particles around SiOx particles | Percentage of SiOx particles around which the number of graphite particles is N accounting for the total number of SiOx particles | Average sphericity degree of graphite particles | Average sphericity degree of SiOx particles | Difference between sphericity degree of SiOx particles and graphite particles | Compactio n density of anode (g/cm³) | Capacity per gram of anode (mAh.g⁻¹) | Ratio of Dv50 of graphite particles to that of silicon-based particles |
|---|---|---|---|---|---|---|---|---|
| Example 1 | 8-14 | 70% | 0.68 | 0.92 | 0.24 | 1.75 | 501 | 2.52 |
| Example 2 | 11-17 | 70% | 0.68 | 0.92 | 0.24 | 1.75 | 498 | 1.7 |
| Example 3 | 6-12 | 70% | 0.68 | 0.92 | 0.24 | 1.75 | 503 | 3.7 |
| Comparativ e Example 1 | 18-22 | 70% | 0.68 | 0.92 | 0.24 | 1.75 | 503 | 1.3 |

| | | | | | | | | |
|---|---|---|---|---|---|---|---|---|
| ^{∗}The capacity per gram here is the capacity obtained when the lithium deintercalation cut-off voltage is 2.0 V (the same below). | | | | | | | | |

Table 1-2 shows the compositions of the anodes in Examples 4 to 6 and Comparative Example 2.

**Table 1-2**

| No. | Number N of graphite particles around SiOx particles | Percentage of SiOx particles around which the number of graphite particles is N accounting for the total number of SiOx particles | Average sphericity degree of SiOx particles | Average sphericity degree of graphite particles | Difference between sphericity degrees of SiOx particles and graphite particles | Compactio n density of anode (g/cm³) | Capacity per gram of anode (mAh.g⁻¹) | Ratio of Dv50 of graphite particles to that of silicon-based particles |
|---|---|---|---|---|---|---|---|---|
| Example 4 | 8-14 | 70% | 0.85 | 0.8 | 0.05 | 1.75 | 501 | 2.48 |
| Example 5 | 11-17 | 70% | 0.85 | 0.8 | 0.05 | 1.75 | 499 | 1.67 |
| Example 6 | 6-12 | 70% | 0.85 | 0.8 | 0.05 | 1.75 | 503 | 3.66 |
| Comparative Example 2 | 18-22 | 70% | 0.85 | 0.8 | 0.05 | 1.75 | 502 | 1.33 |

Table 1-3 shows the compositions of the anodes in Examples 7 to 9 and Comparative Example 3.

**Table 1-3**

| No. | Number N of graphite particles around SiOx particles | Percentage of SiOx particles around which the number of graphite particles is N accounting for the total number of SiOx particles | Average sphericity degree of SiOx particles | Average sphericity degree of graphite particles | Difference between sphericity degrees of SiOx particles and graphite particles | Compactio n density of anode (g/cm³) | Capacity per gram of anode (mAh.g⁻¹) | Ratio of Dv50 of graphite particles to that of silicon-based particles |
|---|---|---|---|---|---|---|---|---|
| Example 7 | 8-14 | 70% | 0.92 | 0.57 | 0.35 | 1.75 | 503 | 2.51 |
| Example 8 | 11-17 | 70% | 0.92 | 0.57 | 0.35 | 1.75 | 497 | 1.72 |
| Example 9 | 6-12 | 70% | 0.92 | 0.57 | 0.35 | 1.75 | 502 | 3.71 |
| Comparative Example 3 | 18-22 | 70% | 0.92 | 0.57 | 0.35 | 1.75 | 501 | 1.28 |

Table 1-4 shows the performance test results of lithium ion batteries in Examples 1 to 9 and Comparative Examples 1 to 3.

**Table 1-4**

| No. | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 1 | 92.5% | 89.5% | 6.2% | 7.4% | 86.7% |
| Example 2 | 90.1% | 87.2% | 7.4% | 8.2% | 87.1% |
| Example 3 | 87.6% | 84.4% | 8.2% | 9.3% | 85.1% |
| Comparative Example 1 | 83.6% | 81.4% | 9.1% | 10.4% | 85.1% |
| Example 4 | 88.1% | 85.8% | 8.4% | 8.6% | 85.7% |
| Example 5 | 86.4% | 84.7% | 8.7% | 8.9% | 84.1% |
| Example 6 | 85.1% | 84.0% | 9.1% | 9.4% | 84.7% |
| Comparative Example 2 | 83.6% | 81.4% | 10.1% | 10.5% | 82.1% |
| Example 7 | 87.1% | 84.9% | 8.9% | 8.8% | 85.1% |
| Example 8 | 85.4% | 83.7% | 9.3% | 9.0% | 83.1% |
| Example 9 | 84.1% | 83.0% | 9.7% | 9.9% | 82.7% |
| Comparative Example 3 | 81.6% | 81.4% | 11.1% | 11.5% | 80.1% |

From the test results of Examples 1 to 3 and Comparative Example 1, it can be seen that the capacity retention rate of the lithium ion battery prepared with SiOₓ particles around which the number N of graphite particles is 6-17 is higher than that of the lithium ion battery prepared with SiOₓ particles around which the number N of graphite particles is 18-22, and the deformation rate is less than that of the lithium ion battery prepared with SiOₓ particles around which the number N of graphite particles is 18-22.

The number of graphite particles around the SiOₓ particles in the anode reflects the matching relation between the particle sizes of the graphite particles and the SiOₓ particles. For the same SiOₓ particles, with the particle size of the graphite particles increasing, the number of graphite particles located within a certain range around the SiOₓ particles decreases. Conversely, with the particle size of the graphite particles decreasing, the number of graphite particles within a certain range around the SiOₓ particles increases. When the number of graphite particles is too large, the SiOₓ particles are difficult to embed into the gap formed by the stacked graphite particles, thus a physical dislocation effect cannot be formed, and the maximum compaction density of the anode is lowered, thereby increasing the contact area of the anode active material with the electrolytic solution, resulting in the formation of more solid electrolyte interface (SEI) films, and reducing the first efficiency and capacity retention rate of the material. The test results of Examples 4 to 6 and Comparative Example 2, and the test results of Examples 7 to 9 and Comparative Example 3 further demonstrate that, when the average sphericity degrees of the graphite particles and the SiOₓ particles are different, the capacity retention rate and deformation resistance of the lithium ion battery prepared with SiOₓ particles around which the number N of graphite particles is 6-17 are better than those of the lithium ion battery prepared with SiOₓ particles around which the number N of graphite particles is 18-22.

2. The anodes in Examples 10 to 12 and Comparative Example 4 were prepared as follows:
(1) Silicon dioxide and metal silicon powder were mixed at a molar ratio of about 1:1 through mechanical dry-mixing and ball milling to obtain a mixed material;
(2) The mixed material was heated at a temperature range of about 1100 to 1550°C under an Ar₂ atmosphere under a pressure of about 10⁻³ to 10⁻¹kPa for about 0.5 to 24 hr to obtain a gas;
(3) The gas obtained was condensed to obtain a solid;
(4) The solid was crushed and screened;
(5) The solid was heat-treated at a temperature range of 400 to 1200°C for about 1 to 24 hr, and the heat-treated solid was cooled to obtain a silicon oxide material SiOₓ, which is used as the silicon-based anode active material; and
(6) The anodes in Examples 10 to 12 and Comparative Example 4 were prepared according to the above method, wherein the silicon-based particles with 8-14 graphite particles around the SiOₓ particles account for about 70% of the total number of the silicon-based particles, and the average sphericity degrees of the silicon-based particles and graphite particles are about 0.92 and about 0.68, respectively.

Table 2-1 shows the specific process parameters in Steps (1)-(5).

**Table 2-1**

| No. | SiO₂:Si (molar ratio) | Pressure (Pa) | Heating temperature (°C) | Heating time (h) | Classification treatment | Heat treatment after classification |
|---|---|---|---|---|---|---|
| Example 10 | 1:1 | 10 | 1350 | 20 | Airstream crushing + multiple gradings | / |
| Example 11 | 1:1 | 10 | 1350 | 20 | Airstream crushing + multiple gradings | 600°C, 2h |
| Example 12 | 1:1 | 10 | 1350 | 20 | Airstream crushing + multiple gradings | 800°C, 2h |
| Comparative Example 4 | 1:1 | 10 | 1350 | 20 | Airstream crushing + multiple gradings | 1000°C, 2h |

Table 2-2 shows the performance parameters of the silicon-based anode active material and graphite particles in Examples 10-12 and Comparative Example 4.

**Table 2-2**

| | I₂/I₁ | Dᵥ50 (µm) | Specific surface area (m².g⁻¹) | Capacity per gram^{∗}(mAh.g⁻¹) | First efficiency |
|---|---|---|---|---|---|
| Graphite particles in Examples 10-12 and Comparative Example 4 | - | 14.1 | 1.06 | 355 | 92.6% |
| Example 10 | 0.41 | 5.6 | 1.28 | 1682 | 69.4% |
| Example 11 | 0.64 | 5.6 | 1.31 | 1672 | 68.7% |
| Example 12 | 1 | 5.6 | 1.28 | 1687 | 68.9% |
| Comparative Example 4 | 2.5 | 5.6 | 1.29 | 1679 | 69.6% |

Table 2-3 shows the performance test results of the lithium ion batteries in Examples 10 to 12 and Comparative Example 4.

**Table 2-3**

| No. | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 10 | 92.5% | 89.5% | 6.2% | 7.4% | 86.7% |
| Example 11 | 91.1% | 87.2% | 7.2% | 8.3% | 86.1% |
| Example 12 | 88.6% | 84.4% | 8.4% | 9.2% | 85.1% |
| Comparative Example 4 | 83.7% | 80.4% | 9.5% | 10.8% | 83.6% |

It can be seen from the performance test results of Examples 10 to 12 and Comparative Example 4 that when about 70% of the SiOₓ particles have 8-14 graphite particles around the same, the cycle performance, deformation resistance and rate performance of the lithium ion battery prepared with silicon oxide SiOₓ that meets about 0<I₂/I₁≤about 1 are better than those of the lithium ion battery prepared with a silicon oxide that meets about 1<I₂/I₁.

3. The anodes in Examples 13 to 15 and Comparative Examples 5 and 6 were prepared as follows:
(1) The silicon-based anode active materials in Examples 13 to 15 and Comparative Examples 5 and 6 were obtained by screening and grading a commercial silicon oxide SiOₓ;
(2) The anodes in Examples 13 to 15 and Comparative Example 5 and 6 were prepared according to the above method, wherein the silicon-based particles with 8-14 graphite particles around the SiOₓ particles account for about 70% of the total number of the silicon-based particles, and the average sphericity degrees of the silicon-based particles and graphite particles are about 0.92 and about 0.68, respectively, wherein the graphite particles are the same as those in Table 2-2.

Table 3-1 shows the performance parameters of the silicon-based anode active material in Examples 13 to 15 and Comparative Examples 5 and 6.

**Table 3-1**

| No. | Dn10/Dᵥ50 | Dᵥ50 (µm) | Specific surface area (m².g⁻¹) | Capacity per gram^{∗}(mAh.g⁻¹) | First efficiency |
|---|---|---|---|---|---|
| Example 13 | 0.3 | 5.5 | 1.56 | 1680 | 68.9% |
| Example 14 | 0.5 | 5.6 | 1.42 | 1678 | 69.2% |
| Example 15 | 0.6 | 5.6 | 1.28 | 1682 | 69.4% |
| Comparative Example 5 | 0.05 | 5.4 | 2.29 | 1676 | 68.6% |
| Comparative Example 6 | 0.8 | 5.8 | 1.1 | 1675 | 68.9% |

Table 3-2 shows the performance test results of the lithium ion batteries prepared with the anodes in Examples 13 to 28 and Comparative Examples 5 and 6.

**Table 3-2**

| No. | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 13 | 88.5% | 84.5% | 7.2% | 7.8% | 86.7% |
| Example 14 | 91.1% | 87.2% | 6.8% | 7.5% | 86.1% |
| Example 15 | 92.5% | 89.5% | 6.2% | 7.4% | 86.7% |
| Comparative Example 5 | 83.7% | 80.4% | 9.5% | 10.8% | 86.6% |
| Comparative Example 6 | 84.1% | 81.4% | 8.8% | 9.8% | 86.4% |

It can be seen from the performance test results of Examples 13 to 15 and Comparative Examples 5 and 6 that when 70% of the SiOₓ particles have 8-14 graphite particles around the same, the cycle performance, deformation resistance and rate performance of the lithium ion battery prepared with silicon oxide that meets about 0.3≤Dn10/Dv50≤about 0.6 are better than those of the lithium ion battery prepared with silicon oxide that meets Dn10/Dv50<about 0.3 or about 0.6<Dn10/Dv50.

4. The anodes in Examples 16 to 19 were prepared as follows:
(1) A commercial silicon oxide SiOₓ (0.5<x<1.5, Dv50=about 5 µm), the carbon precursor and the oxide precursor MeTₙ were added to about 150 mL of ethanol and about 1.47 mL of deionized water, and stirred for about 4 hr until a uniform suspension liquid was formed;
(2) The suspension liquid was spray-dried (inlet temperature: about 220°C, outlet temperature: about 110°C) to obtain powder;
(3) The powder was sintered at about 250 to 900°C for about 0.5 to 24 hr, to obtain a silicon oxide with an oxide MeO_{y} layer on the surface thereof, which is used as the silicon-based anode active material; and
(4) The anodes in Examples 16 to 19 were prepared according to the above method, wherein the silicon-based particles with 8-14 graphite particles around account for about 70% of the total number of the silicon-based particles, and the average sphericity degrees of the silicon-based particles and graphite particles are about 0.92 and about 0.68, respectively, wherein the graphite particles are the same as those in Table 2-2.

Table 4-1 shows the process conditions for preparing the silicon oxide SiOₓ with an oxide MeO_{y} layer in Examples 16-19.

**Table 4-1**

| No. | Commercial silicon oxide SiOx | Carbon precursor | Oxide precursor MeTₙ | Sintering process |
|---|---|---|---|---|
| Example 16 | 100 g | Polyvinylpyrrolidone 2.21 g | 1 g aluminum isopropoxide | N₂ flow rate: 1.5 L/min, heating at 3°C/min to 600°C, holding for 2 hr |
| Example 17 | 100 g | Polyvinylpyrrolidone 2.21 g | 1 g isopropyl titanate | N₂ flow rate: 1.5 L/min, heating at 3°C/min to 600°C, holding for 2 hr |
| Example 18 | 100 g | Polyvinylpyrrolidone 2.21 g | 0.5 g isopropyl titanate + 0.5 g aluminum isopropoxide | N₂ flow rate: 1.5 L/min, heating at 3°C/min to 600°C, holding for 2 hr |
| Example 19 | 100 g | Polyvinylpyrrolidone 2.21 g | - | N₂ flow rate: 1.5 L/min, heating at 3°C/min to 600°C, holding for 2 hr |

| | | | | |
|---|---|---|---|---|
| "-" represents substance not present. | | | | |

Table 4-2 shows the compositions and performance parameters of the silicon-based anode active material in Example 1 and Examples 16 to 19.

**Table 4-2**

| No. | Types of metal elements | Metal content (wt%) | Carbon content in oxide MeO_{y} layer (wt%) | Specific surface area (m²/g) | Capacity per gram^{∗}(mAh.g⁻¹) | First efficiency |
|---|---|---|---|---|---|---|
| Example 1 | - | - | - | 1.28 | 1682 | 69.4% |
| Example 16 | Al | 0.125 | 0.300 | 1.45 | 1682 | 68.6% |
| Example 17 | Ti | 0.125 | 0.300 | 1.47 | 1678 | 74.0% |
| Example 18 | Al+Ti | 0.125 | 0.300 | 1.53 | 1682 | 70.3% |
| Example 19 | Al | 0.000 | 0.300 | 1.38 | 1690 | 74.2% |

| | | | | | | |
|---|---|---|---|---|---|---|
| "-" represents substance not present. | | | | | | |

Table 4-3 shows the performance test results of the lithium ion batteries prepared with the anodes in Example 1 and Examples 16 to 19.

**Table 4-3**

| No. | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 1 | 92.5% | 89.5% | 6.2% | 7.4% | 86.7% |
| Example 16 | 94.0% | 91.7% | 5.6% | 6.8% | 84.4% |
| Example 17 | 93.4% | 90.6% | 6.7% | 7.6% | 85.4% |
| Example 18 | 93.6% | 90.8% | 6.4% | 7.6% | 85.9% |
| Example 19 | 93.1% | 89.9% | 6.8% | 7.7% | 87.7% |

From the test results of Example 1 and Examples 16-19, it can be seen that when about 70% of the SiOₓ particles have 8-14 graphite particles around the same, coating an oxide MeO_{y} layer on the silicon oxide can further improve the cycle performance and/or rate performance, and deformation resistance of the lithium ion batteries.

5. The anodes in Examples 20 to 25 were prepared as follows:
(1) The carbon material (single-wall carbon nanotube (SCNT) and/or multi-wall carbon nanotube (MCNT)) and a polymer were dispersed in water at high speed for about 12 hr to obtain a uniformly mixed slurry:
(2) A commercial silicon oxide SiOₓ (0.5<x<1.5, D_{V}50= about 5 µm) was added to the uniformly mixed slurry in (1) and stirred for about 4 hr to obtain a uniformly mixed dispersion liquid;
(3) The dispersion liquid was spray-dried (inlet temperature: about 200°C, outlet temperature: about 110°C) to obtain powder which is used as the silicon-based anode active material; and
(4) The anodes in Examples 20 to 25 were prepared according to the above method, wherein the silicon-based particles with 8-14 graphite particles around SiOₓ particles account for about 70% of the total number of the silicon-based particles, and the average sphericity degrees of the silicon-based particles and graphite particles are about 0.92 and about 0.68, respectively, wherein the graphite particles are the same as those in Table 2-2.

Table 5-1 shows the compositions of the silicon oxide SiOₓ with a polymer coating in Examples 20 to 25.

**Table 5-1**

| No. | CNT type | CNT content (wt%) | Types of polymer | Polymer content (wt%) |
|---|---|---|---|---|
| Example 1 | - | - | - | - |
| Example 20 | SCNT | 0.10 | CMC-Na | 0.15 |
| Example 21 | MCNT | 0.10 | CMC-Na | 0.15 |
| Example 22 | SCNT:MCNT=1:1 | 0.10 | CMC-Na | 0.15 |
| Example 23 | SCNT | 0.01 | CMC-Na | 0.15 |
| Example 24 | SCNT | 0.50 | CMC-Na | 0.15 |
| Example 25 | SCNT | 0.10 | CMC-Na | 0.025 |

| | | | | |
|---|---|---|---|---|
| "-" represents substance not present. | | | | |

The full names of the English abbreviations in Table 5-1 are as follows:
SCNT: Single-wall carbon nanotube
MCNT: Multi-wall carbon nanotube
CMC-Na: Sodium carboxymethyl cellulose
PVP: Polyvinylpyrrolidone
PVDF: Polyvinylidene fluoride
PAANa: Sodium polyacrylate

Table 5-2 shows the performance test results of the lithium ion batteries prepared with the anodes in Example 1 and Examples 20 to 25.

**Table 5-2**

| No. | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 1 | 92.5% | 89.5% | 6.2% | 7.4% | 86.7% |
| Example 20 | 94.6% | 92.4% | 6.3% | 7.5% | 87.6% |
| Example 21 | 93.2% | 90.4% | 6.4% | 7.5% | 87.6% |
| Example 22 | 93.7% | 90.8% | 6.4% | 7.8% | 87.3% |
| Example 23 | 94.6% | 92.4% | 6.3% | 7.5% | 87.6% |
| Example 24 | 94.4% | 92.0% | 6.7% | 7.8% | 88.6% |
| Example 25 | 93.2% | 90.2% | 6.6% | 7.7% | 87.6% |

From the test results of Example 1 and Examples 20 to 25, it can be seen that when the SiOₓ particles have 8-14 graphite particles around the same, coating a carbon nanotube-containing polymer layer on the silicon oxide can further improve the cycle performance and/or rate performance, and deformation resistance of the lithium ion batteries.

6. The anode active materials in Examples 26 to 28 and Comparative Examples 7 and 8 were prepared as follows:
(1) A silicon-based anode active material with an I₂/I₁ value of about 0.5 was prepared, wherein the preparation method was similar to the preparation method of Example 11, except that the thermal treatment temperature after grading was about 500°C and the time was about 2 hr;
(2) The silicon-based anode active materials in Examples 26 to 28 and Comparative Examples 7 and 8 were obtained after further grading treatment; and
(3) The anodes in Examples 26 to 28 and Comparative Example 7 and 8 were prepared according to the above method, wherein the silicon-based particles with 8-14 graphite particles around the SiOₓ particles account for about 70% of the total number of the silicon-based particles, and the average sphericity degrees of the silicon-based particles and graphite particles are about 0.92 and about 0.68, respectively, wherein the graphite particles are the same as those in Table 2-2.

Table 6-1 shows the performance parameters of the silicon-based anode active material in Examples 26 to 28 and Comparative Examples 7 and 8.

**Table 6-1**

| No. | I₂/I₁ | Dn10/Dᵥ50 | Specific surface area (m².g⁻¹) | Capacity per gram ^{∗}(mAh.g⁻¹) |
|---|---|---|---|---|
| Example 26 | 0.5 | 0.3 | 1.56 | 1678 |
| Example 27 | 0.5 | 0.5 | 1.26 | 1678 |
| Example 28 | 0.5 | 0.6 | 1.23 | 1680 |
| Comparative Example 7 | 0.5 | 0.05 | 2.29 | 1673 |
| Comparative Example 8 | 0.5 | 0.8 | 1.21 | 1674 |

Table 6-2 shows the performance test results of the lithium ion batteries prepared with the anodes in Examples 26 to 28 and Comparative Examples 7 and 8.

**Table 6-2**

| No. | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 26 | 91.2% | 86.1% | 7.1% | 8.4% | 85.7% |
| Example 27 | 91.6% | 87.6% | 6.8% | 8.2% | 86.4% |
| Example 28 | 92.3% | 88.9% | 6.4% | 7.9% | 87.7% |
| Comparative Example 7 | 83.7% | 80.4% | 9.5% | 10.8% | 84.6% |
| Comparative Example 8 | 85.7% | 83.4% | 8.5% | 9.8% | 84.6% |

It can be seen from the performance test results in Examples 26 to 28 and Comparative Examples 7 and 8 that when about 70% of the SiOₓ particles have 8-14 graphite particles around the same and about 0<I₂/I₁≤about 1, the cycle performance, deformation resistance and rate performance of the lithium ion battery having an anode prepared with silicon oxide that meets about 0.3≤Dn10/Dv50≤about 0.6 are better than those of the lithium ion battery having an anode prepared with silicon oxide that meets Dn10/Dv50<about 0.3 or about 0.6<Dn10/Dv50.

7. The anodes in Examples 29 to 32 were prepared as follows:
(1) An oxide MeO_{y} layer was further coated on the silicon-based anode active material in Example 11 to obtain the silicon-based anode active material in Examples 29 to 32, and the coating method in Examples 29 to 32 was the same as that in Examples 16 to 19; and
(2) The anodes in Examples 29 to 32 were prepared according to the above method, wherein the silicon-based particles with 8-14 graphite particles around SiOₓ particles account for about 70% of the total number of the silicon-based particles, and the average sphericity degrees of the silicon-based particles and graphite particles are about 0.92 and about 0.68, respectively, wherein the graphite particles are the same as those in Table 2-2.

Table 7-1 shows the compositions and performance parameters of the silicon-based anode active material in Example 11 and Examples 29 to 32.

**Table 7-1**

| No. | Types of metal elements | Metal element content (wt%) | Carbon content in oxide MeO_{y} layer (wt%) | Specific surface area (m²/g) | Capacity per gram^{∗}(mAh.g⁻¹) | First efficiency |
|---|---|---|---|---|---|---|
| Example 11 | - | - | 0.030 | 1.29 | 1675 | 68.2% |
| Example 29 | Al | 0.125 | 0.300 | 1.42 | 1677 | 68.7% |
| Example 30 | Ti | 0.125 | 0.300 | 1.47 | 1664 | 73.1% |
| Example 31 | Al+Ti | 0.125 | 0.300 | 1.53 | 1675 | 70.4% |
| Example 32 | Al | 0.000 | 0.300 | 1.35 | 1681 | 74.3% |

| | | | | | | |
|---|---|---|---|---|---|---|
| "-" represents substance not present. | | | | | | |

Table 7-2 shows the performance test results of the lithium ion batteries prepared with the anodes in Example 11 and Examples 29 to 32.

**Table 7-2**

| No. | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 11 | 91.1% | 87.2% | 7.2% | 8.3% | 86.1% |
| Example 29 | 93.8% | 91.4% | 5.9% | 6.9% | 84.2% |
| Example 30 | 93.0% | 90.2% | 6.9% | 7.9% | 85.1% |
| Example 31 | 93.6% | 90.7% | 6.7% | 7.8% | 85.3% |
| Example 32 | 92.7% | 89.4% | 7.0% | 7.9% | 87.2% |

From the test results of Example 11 and Examples 29-32, it can be seen that when about 70% of the SiOₓ particles have 8-14 graphite particles around the same and about 0<I₂/I₁≤about 1, coating an oxide MeO_{y} layer on the silicon oxide can further improve the cycle performance and/or rate performance, and deformation resistance of the lithium ion batteries.

8. The anodes in Examples 33 to 40 were prepared as follows:
(1) A carbon nanotube-containing polymer layer was further coated on the silicon-based anode active material in Example 11 to obtain the silicon-based anode active material in Examples 33 to 40, and the coating method in Examples 33to 40 was the same as that in Examples 20 to 25; and
(2) The anodes in Examples 33 to 40 were prepared according to the above method, wherein the silicon-based particles with 8-14 graphite particles around SiOₓ particles account for about 70% of the total number of the silicon-based particles, and the average sphericity degrees of the silicon-based particles and graphite particles are about 0.92 and about 0.68, respectively, wherein the graphite particles are the same as those in Table 2-2.

Table 8-1 shows the compositions of the silicon-based anode active materials having a polymer layer in Examples 33 to 40.

**Table 8-1**

| No. | CNT type | CNT content (wt%) | Types of polymer | Polymer content (wt%) |
|---|---|---|---|---|
| Example 11 | - | - | - | - |
| Example 33 | SCNT | 0.10 | CMC-Na | 0.15 |
| Example 34 | MCNT | 0.10 | CMC-Na | 0.15 |
| Example 35 | SCNT:MCNT=1:1 | 0.10 | CMC-Na | 0.15 |
| Example 36 | SCNT | 0.01 | CMC-Na | 0.15 |
| Example 37 | SCNT | 0.50 | CMC-Na | 0.15 |
| Example 38 | SCNT | 0.10 | PVP | 0.15 |
| Example 39 | SCNT | 0.10 | PAANa | 0.15 |
| Example 40 | SCNT | 0.10 | CMC-Na | 0.025 |

| | | | | |
|---|---|---|---|---|
| "-" represents substance not present. | | | | |

Table 8-2 shows the performance test results of the lithium ion batteries prepared with the anodes in Example 11 and Examples 33 to 40.

**Table 8-2**

| No. | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 11 | 91.1% | 87.2% | 7.2% | 8.3% | 86.1% |
| Example 33 | 93.1% | 91.4% | 6.7% | 7.8% | 87.6% |
| Example 34 | 92.3% | 89.9% | 6.7% | 8.4% | 87.0% |
| Example 35 | 92.5% | 89.9% | 6.9% | 8.2% | 87.3% |
| Example 36 | 92.8% | 90.4% | 7.3% | 8.5% | 87.4% |
| Example 37 | 92.6% | 91.0% | 7.4% | 8.3% | 87.9% |
| Example 38 | 92.3% | 89.4% | 6.9% | 8.2% | 87.4% |
| Example 39 | 92.7% | 90.0% | 7.0% | 8.2% | 86.4% |
| Example 40 | 92.5% | 90.1% | 7.1% | 8.2% | 87.6% |

From the test results of Example 11 and Examples 33-40, it can be seen that when about 70% of the SiOₓ particles have 8-14 graphite particles around the same and about 0<I₂/I₁≤about 1, coating a carbon nanotube-containing polymer layer on the silicon oxide can further improve the cycle performance and/or rate performance, and deformation resistance of the lithium ion batteries.

9. The anodes in Examples 41 to 45 were prepared as follows:
(1) An oxide MeO_{y} layer was further coated on the silicon-based anode active material of Example 14 to obtain the silicon-based anode active material in Examples 41 to 45, and the coating method in Examples 41 to 45 was the same as that in Examples 16 to 19; and
(2) The anodes in Examples 41 to 45 were prepared according to the above method, wherein the silicon-based particles with 8-14 graphite particles around SiOₓ particles account for about 70% of the total number of the silicon-based particles, and the average sphericity degrees of the silicon-based particles and graphite particles are about 0.92 and about 0.68, respectively, wherein the graphite particles are the same as those in Table 2-2.

Table 9-1 shows the compositions and performance parameters of the silicon-based anode active material in Example 14 and Examples 41 to 45.

**Table 9-1**

| No. | Types of metal element s | Metal element content (wt%) | Carbon content in oxide MeO_{y} layer (wt%) | Specific surface area (m²/g) | Capacity per gram^{∗}(mAh.g⁻¹) | First efficiency |
|---|---|---|---|---|---|---|
| Example 14 | - | - | 0.030 | 1.28 | 1682 | 69.4% |
| Example 41 | Al | 0.125 | 0.300 | 1.44 | 1681 | 68.4% |
| Example 42 | Ti | 0.125 | 0.300 | 1.47 | 1677 | 74.1% |
| Example 43 | Al+Ti | 0.125 | 0.300 | 1.54 | 1680 | 70.2% |
| Example 44 | Al | 0.000 | 0.300 | 1.28 | 1688 | 74.1% |
| Example 45 | Al | 0.500 | 0.300 | 1.78 | 1660 | 68.1% |

| | | | | | | |
|---|---|---|---|---|---|---|
| "-" represents substance not present. | | | | | | |

Table 9-2 shows the performance test results of the lithium ion batteries prepared with the anodes in Example 14 and Examples 41 to 45.

**Table 9-2**

| No. | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 14 | 91.1% | 87.2% | 6.8% | 7.5% | 86.1% |
| Example 41 | 93.0% | 89.7% | 6.1% | 6.9% | 84.2% |
| Example 42 | 92.4% | 88.6% | 7.2% | 7.7% | 85.4% |
| Example 43 | 92.6% | 88.8% | 6.9% | 7.8% | 85.3% |
| Example 44 | 92.1% | 87.9% | 7.2% | 7.8% | 87.4% |
| Example 45 | 93.6% | 90.1% | 5.8% | 6.4% | 82.1% |

From the performance test results of Example 14 and Examples 41-45, it can be seen that when about 70% of the SiOₓ particles have 8-14 graphite particles around the same and about 0.3≤Dn10/Dv50≤about 0.6, coating an oxide MeO_{y} layer on the silicon oxide can further improve the cycle performance and/or rate performance, and deformation resistance of the lithium ion batteries.

10. The anodes in Examples 46 to 52 were prepared as follows:
(1) A carbon nanotube-containing polymer layer was further coated on the silicon-based anode active material in Example 14 to obtain the silicon-based anode active material in Examples 46 to 52, and the coating method in Examples 46 to 52 was the same as that in Examples 20 to 25;
(2) The anodes in Examples 46 to 52 were prepared according to the above method, wherein the silicon-based particles with 8-14 graphite particles around SiOₓ particles account for about 70% of the total number of the silicon-based particles, and the average sphericity degrees of the silicon-based particles and graphite particles are about 0.92 and about 0.68, respectively, wherein the graphite particles are the same as those in Table 2-2.

Table 10-1 shows the compositions of the silicon-based anode active material in Example 14 and Examples 46 to 52.

**Table 10-1**

| No. | CNT type | CNT content (wt%) | Types of polymer | Polymer content (wt%) |
|---|---|---|---|---|
| Example 14 | - | - | - | - |
| Example 46 | SCNT | 0.10 | CMC-Na | 0.15 |
| Example 47 | MCNT | 0.10 | CMC-Na | 0.15 |
| Example 48 | SCNT:MCNT=1:1 | 0.10 | CMC-Na | 0.15 |
| Example 49 | SCNT | 0.10 | PVP | 0.15 |
| Example 50 | SCNT | 0.10 | PVDF | 0.15 |
| Example 51 | SCNT | 0.10 | PAANa | 0.15 |
| Example 52 | SCNT | 0.10 | CMC-Na | 0.025 |

| | | | | |
|---|---|---|---|---|
| "-" represents substance not present. | | | | |

Table 10-2 shows the performance test results of the lithium ion batteries prepared with the anodes in Example 14 and Examples 46 to 52.

**Table 10-2**

| No. | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 14 | 91.1% | 87.2% | 6.8% | 7.5% | 86.1% |
| Example 46 | 93.0% | 91.3% | 6.9% | 7.7% | 87.7% |
| Example 47 | 92.2% | 89.8% | 6.8% | 8.3% | 87.2% |
| Example 48 | 92.6% | 89.8% | 6.9% | 8.1% | 87.1% |
| Example 49 | 92.4% | 89.2% | 6.8% | 8.3% | 87.2% |
| Example 50 | 92.1% | 89.4% | 7.0% | 8.2% | 85.3% |
| Example 51 | 92.5% | 90.2% | 7.1% | 8.1% | 86.5% |
| Example 52 | 92.1% | 90.0% | 7.2% | 8.3% | 87.5% |

From the test results of Example 14 and Examples 46 to 52, it can be seen that when about 70% of the SiOₓ particles have 8-14 graphite particles around the same and about 0.3≤Dn10/Dv50≤about 0.6, coating a carbon nanotube-containing polymer layer on the silicon oxide can further improve the cycle performance and/or rate performance, and deformation resistance of the lithium ion batteries.

11. The anodes in Examples 53 to 62 were prepared as follows:
(1) A carbon nanotube-containing polymer layer was further coated on the silicon-based anode active material in Example 16 to obtain the silicon-based anode active material in Examples 53 to 62, and the coating method in Examples 53 to 62 was the same as that in Examples 53 to 62; and
(2) The anodes in Examples 53 to 62 were prepared according to the above method, wherein the silicon-based particles with 8-14 graphite particles around SiOₓ particles account for about 70% of the total number of the silicon-based particles, and the average sphericity degrees of the silicon-based particles and graphite particles are about 0.92 and about 0.68, respectively, wherein the graphite particles are the same as those in Table 2-2.

Table 11-1 shows the compositions of the silicon-based anode active material in Example 16 and Examples 53 to 62.

**Table 11-1**

| No. | CNT type | CNT content (wt%) | Types of polymer | Polymer content (wt%) |
|---|---|---|---|---|
| Example 16 | - | - | - | - |
| Example 53 | SCNT | 0.10 | CMC-Na | 0.15 |
| Example 54 | MCNT | 0.10 | CMC-Na | 0.15 |
| Example 55 | SCNT:MCNT=1:1 | 0.10 | CMC-Na | 0.15 |
| Example 56 | SCNT | 0.01 | CMC-Na | 0.15 |
| Example 57 | SCNT | 0.50 | CMC-Na | 0.15 |
| Example 58 | SCNT | 0.10 | PVP | 0.15 |
| Example 59 | SCNT | 0.10 | PVDF | 0.15 |
| Example 60 | SCNT | 0.10 | PAANa | 0.15 |
| Example 61 | SCNT | 0.10 | CMC-Na | 0.4 |
| Example 62 | SCNT | 0.10 | CMC-Na | 0.025 |

| | | | | |
|---|---|---|---|---|
| "-" represents substance not present. | | | | |

Table 11-2 shows the performance test results of the lithium ion batteries prepared with the anodes in Example 16 and Examples 53 to 62.

**Table 11-2**

| No. | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 16 | 94.0% | 91.7% | 5.6% | 6.8% | 84.4% |
| Example 53 | 96.0% | 94.3% | 5.5% | 7.1% | 84.6% |
| Example 54 | 95.2% | 92.8% | 5.6% | 7.5% | 84.5% |
| Example 55 | 95.6% | 92.8% | 5.7% | 7.6% | 84.3% |
| Example 56 | 95.5% | 93.3% | 6.4% | 7.4% | 85.3% |
| Example 57 | 95.4% | 93.1% | 6.5% | 7.6% | 85.7% |
| Example 58 | 95.4% | 92.2% | 5.8% | 7.7% | 84.2% |
| Example 59 | 95.1% | 92.1% | 6.0% | 7.5% | 85.3% |
| Example 60 | 95.5% | 92.8% | 6.1% | 7.7% | 84.5% |
| Example 61 | 95.3% | 92.1% | 6.3% | 7.3% | 82.4% |
| Example 62 | 95.1% | 92.0% | 6.2% | 7.8% | 85.5% |

From the test results of Example 16 and Examples 53-62, it can be seen that when about 70% of the SiOₓ particles have 8-14 graphite particles around the same, further coating a carbon nanotube-containing polymer layer on the silicon oxide which has an oxide MeO_{y} layer on the surface thereof can further improve the cycle performance and/or rate performance, and deformation resistance of the lithium ion batteries.

12. The anodes in Examples 63 to 67 were prepared as follows:
(1) An oxide MeO_{y} layer was further coated on the silicon-based anode active material in Example 27 to obtain the silicon-based anode active material in Examples 63 to 67, and the coating method in Examples 63 to 67 was the same as that in Examples 16 to 19; and
(2) The anodes in Examples 63 to 67 were prepared according to the above method, wherein the silicon-based particles with 8-14 graphite particles around SiOₓ particles account for about 70% of the total number of the silicon-based particles, and the average sphericity degrees of the silicon-based particles and graphite particles are about 0.92 and about 0.68, respectively, wherein the graphite particles are the same as those in Table 2-2.

Table 12-1 shows the compositions and performance parameters of the silicon-based anode active material in Example 27 and Examples 63 to 67.

**Table 12-1**

| No. | Types of metal elements | Metal element content (wt%) | Carbon content in oxide MeO_{y} layer (wt%) | Specific surface area (m²/g) | Capacity per gram^{∗}(mAh.g⁻¹) | First efficiency |
|---|---|---|---|---|---|---|
| Example 27 | - | - | 0.030 | 1.28 | 1682 | 69.4% |
| Example 63 | Al | 0.125 | 0.300 | 1.45 | 1681 | 68.4% |
| Example 64 | Ti | 0.125 | 0.300 | 1.47 | 1677 | 74.1% |
| Example 65 | Al+Ti | 0.125 | 0.300 | 1.53 | 1680 | 70.2% |
| Example 66 | Al | 0.000 | 0.300 | 1.38 | 1688 | 74.1% |
| Example 67 | Al | 0.500 | 0.300 | 1.98 | 1660 | 68.1% |

| | | | | | | |
|---|---|---|---|---|---|---|
| "-" represents substance not present. | | | | | | |

Table 12-2 shows the performance test results of the lithium ion batteries prepared with the anodes in Example 27 and Examples 63 to 67.

**Table 12-2**

| No. | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 27 | 92.1% | 88.6% | 6.7% | 7.8% | 85.4% |
| Example 63 | 94.0% | 90.7% | 6.1% | 6.9% | 84.2% |
| Example 64 | 93.4% | 89.6% | 7.2% | 7.7% | 85.4% |
| Example 65 | 93.6% | 89.8% | 6.9% | 7.8% | 85.3% |
| Example 66 | 93.1% | 88.9% | 7.2% | 7.8% | 87.4% |
| Example 67 | 94.6% | 91.1% | 5.8% | 6.4% | 82.1% |

From the performance test results of Example 27 and Examples 63 to 67, it can be seen that when about 70% of the SiOₓ particles have 8-14 graphite particles around the same and about 0<I₂/I₁≤about 1, and about 0.3≤Dn10/Dv50≤about 0.6, coating an oxide MeO_{y} layer on the silicon oxide can further improve the cycle performance and/or rate performance, and deformation resistance of the lithium ion batteries.

13. The anodes in Examples 68 to 77 were prepared as follows:
(1) A carbon nanotube-containing polymer layer was further coated on the silicon-based anode active material in Example 27 to obtain the silicon-based anode active material in Examples 68 to 77, and the coating method in Examples 68 to 77 was the same as that in Examples 20 to 25;
(2) The anodes in Examples 68 to 77 were prepared according to the above method, wherein the silicon-based particles with 8-14 graphite particles around SiOₓ particles account for about 70% of the total number of the silicon-based particles, and the average sphericity degrees of the silicon-based particles and graphite particles are about 0.92 and about 0.68, respectively, wherein the graphite particles are the same as those in Table 2-2.

Table 13-1 shows the compositions of the silicon-based anode active material in Example 27 and Examples 68-77.

**Table 13-1**

| No. | CNT type | CNT content (wt%) | Types of polymer | Polymer content (wt%) |
|---|---|---|---|---|
| Example 27 | - | - | - | - |
| Example 68 | SCNT | 0.10 | CMC-Na | 0.15 |
| Example 69 | MCNT | 0.10 | CMC-Na | 0.15 |
| Example 70 | SCNT:MCNT=1:1 | 0.10 | CMC-Na | 0.15 |
| Example 71 | SCNT | 0.01 | CMC-Na | 0.15 |
| Example 72 | SCNT | 0.50 | CMC-Na | 0.15 |
| Example 73 | SCNT | 0.10 | PVP | 0.15 |
| Example 74 | SCNT | 0.10 | PVDF | 0.15 |
| Example 75 | SCNT | 0.10 | PAANa | 0.15 |
| Example 76 | SCNT | 0.10 | CMC-Na | 0.4 |
| Example 77 | SCNT | 0.10 | CMC-Na | 0.025 |

| | | | | |
|---|---|---|---|---|
| - represents substance not present. | | | | |

Table 13-2 shows the performance test results of the lithium ion batteries prepared with the anodes in Example 27 and Examples 68 to 77.

**Table 13-2**

| No. | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 27 | 92.1% | 88.6% | 6.7% | 7.8% | 85.4% |
| Example 68 | 94.0% | 91.3% | 5.5% | 8.1% | 84.6% |
| Example 69 | 93.1% | 89.9% | 5.6% | 8.5% | 84.3% |
| Example 70 | 93.6% | 89.8% | 5.7% | 8.6% | 84.1% |
| Example 71 | 93.5% | 90.4% | 6.4% | 8.9% | 85.3% |
| Example 72 | 93.4% | 90.1% | 6.5% | 9.1% | 85.6% |
| Example 73 | 93.3% | 89.2% | 5.8% | 8.7% | 84.1% |
| Example 74 | 93.0% | 89.1% | 6.0% | 8.5% | 85.5% |
| Example 75 | 93.5% | 89.7% | 6.1% | 8.7% | 84.4% |
| Example 76 | 93.3% | 89.1% | 6.3% | 8.3% | 85.3% |
| Example 77 | 93.0% | 89.0% | 6.2% | 8.8% | 85.7% |

From the performance test results of Example 27 and Examples 68 to 77, it can be seen that when about 70% of the SiOₓ particles have 8-14 graphite particles around the same, about 0<I₂/I₁≤about 1, and about 0.3≤Dn10/Dv50≤about 0.6, coating a carbon nanotube-containing polymer layer on the silicon oxide can further improve the cycle performance and/or rate performance, and deformation resistance of the lithium ion batteries.

14. The anode active materials in Examples 78 to 86 were prepared as follows:
(1) A carbon nanotube-containing polymer layer was further coated on the silicon-based anode active material in Example 45 to obtain the silicon-based anode active material in Examples 78 to 86, and the coating method in Examples 78 to 86 was the same as that in Examples 20 to 25; and
(2) The anodes in Examples 78 to 86 were prepared according to the above method, wherein the silicon-based particles with 8-14 graphite particles around SiOₓ particles account for about 70% of the total number of the silicon-based particles, and the average sphericity degrees of the silicon-based particles and graphite particles are about 0.92 and about 0.68, respectively, wherein the graphite particles are the same as those in Table 2-2.

Table 14-1 shows the compositions of the silicon-based anode active material in Example 45 and Examples 78 to 86.

**Table 14-1**

| No. | CNT type | CNT content (wt%) | Species of polymer | Polymer content (wt%) |
|---|---|---|---|---|
| Example 45 | - | - | - | - |
| Example 78 | SCNT | 0.10 | CMC-Na | 0.15 |
| Example 79 | MCNT | 0.10 | CMC-Na | 0.15 |
| Example 80 | SCNT:MCNT=1:1 | 0.10 | CMC-Na | 0.15 |
| Example 81 | SCNT | 0.01 | CMC-Na | 0.15 |
| Example 82 | SCNT | 0.10 | PVP | 0.15 |
| Example 83 | SCNT | 0.10 | PVDF | 0.15 |
| Example 84 | SCNT | 0.10 | PAANa | 0.15 |
| Example 85 | SCNT | 0.10 | CMC-Na | 0.4 |
| Example 86 | SCNT | 0.10 | CMC-Na | 0.025 |

| | | | | |
|---|---|---|---|---|
| "-" represents substance not present. | | | | |

Table 14-2 shows the performance test results of the lithium ion batteries prepared with the anodes in Example 45 and Examples 78 to 86.

**Table 14-2**

| No. | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 45 | 93.6% | 90.1% | 5.8% | 6.4% | 82.1% |
| Example 78 | 95.5% | 92.4% | 5.6% | 8.0% | 84.6% |
| Example 79 | 94.6% | 91.4% | 5.7% | 8.2% | 84.3% |
| Example 80 | 95.1% | 92.2% | 5.7% | 8.4% | 83.1% |
| Example 81 | 95.1% | 90.7% | 6.3% | 8.7% | 85.2% |
| Example 82 | 94.8% | 91.2% | 5.9% | 8.6% | 84.0% |
| Example 83 | 94.5% | 90.6% | 6.1% | 8.4% | 85.2% |
| Example 84 | 95.0% | 90.9% | 6.0% | 8.5% | 84.0% |
| Example 85 | 94.6% | 90.6% | 6.4% | 8.2% | 82.1% |
| Example 86 | 94.4% | 90.5% | 6.1% | 8.5% | 85.4% |

From the test results of Example 45 and Examples 78 to 86, it can be seen that when about 70% of the SiOₓ particles have 8-14 graphite particles around the same, and about 0.3≤Dn10/Dv50≤about 0.6, coating a carbon nanotube-containing polymer layer on the silicon oxide which has an oxide MeOy layer on the surface thereof can further improve the cycle performance and/or rate performance of the lithium ion batteries, while the deformation rate of the batteries does not have obvious change.

15. The anode active materials in Examples 87 to 94 were prepared as follows;
(1) A carbon nanotube-containing polymer layer was further coated on the silicon-based anode active material in Example 67 to obtain the silicon-based anode active material in Examples 87 to 94, and the coating method in Examples 87 to 94 was the same as that in Examples 20 to 25; and
(2) The anodes in Examples 87 to 94 were prepared according to the above method, wherein the silicon-based particles with 8-14 graphite particles around SiOₓ particles account for about 70% of the total number of the silicon-based particles, and the average sphericity degrees of the silicon-based particles and graphite particles are about 0.92 and about 0.68, respectively, wherein the graphite particles are the same as those in Table 2-2.

Table 15-1 shows the compositions of the silicon-based anode active material in Example 67 and Examples 87 to 94.

**Table 15-1**

| No. | CNT type | CNT content (wt%) | Species of polymer | Polymer content (wt%) |
|---|---|---|---|---|
| Example 67 | - | - | - | - |
| Example 87 | SCNT | 0.10 | CMC-Na | 0.15 |
| Example 88 | MCNT | 0.10 | CMC-Na | 0.15 |
| Example 89 | SCNT:MCNT=1:1 | 0.10 | CMC-Na | 0.15 |
| Example 90 | SCNT | 0.10 | PVP | 0.15 |
| Example 91 | SCNT | 0.10 | PVDF | 0.15 |
| Example 92 | SCNT | 0.10 | PAANa | 0.15 |
| Example 93 | SCNT | 0.10 | CMC-Na | 0.4 |
| Example 94 | SCNT | 0.10 | CMC-Na | 0.025 |

| | | | | |
|---|---|---|---|---|
| "-" represents substance not present. | | | | |

Table 15-2 shows the performance test results of the lithium ion batteries prepared with the anodes in Example 67 and Examples 87 to 94.

**Table 15-2**

| No. | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 67 | 94.6% | 91.1% | 5.8% | 6.4% | 82.1% |
| Example 87 | 96.5% | 93.3% | 5.5% | 8.1% | 84.6% |
| Example 88 | 95.5% | 91.9% | 5.6% | 8.5% | 84.3% |
| Example 89 | 96.2% | 91.8% | 5.7% | 8.6% | 84.1% |
| Example 90 | 95.7% | 91.2% | 5.8% | 8.7% | 84.1% |
| Example 91 | 95.4% | 91.1% | 6.0% | 8.5% | 85.5% |
| Example 92 | 96.1% | 91.7% | 6.1% | 8.7% | 84.4% |
| Example 93 | 95.7% | 91.1% | 6.5% | 8.3% | 82.3% |
| Example 94 | 95.3% | 91.0% | 6.2% | 8.8% | 85.7% |

From the performance test results of Example 67 and Examples 87-94, it can be seen that when about 70% of the SiOₓ particles have 8-14 graphite particles around the same, about 0<I₂/I₁≤about 1 and about 0.3≤Dn10/Dv50≤about 0.6, coating a carbon nanotube-containing polymer layer on the silicon oxide which has an oxide MeOy layer on the surface thereof can further improve the cycle performance and/or rate performance of the lithium ion batteries, while the deformation rate of the batteries does not have obvious change.

16. with a commercial silicon oxide SiOₓ (0.5<x<1.5, Dv50= about 5.3 µm) and graphite particles (D_{V}50=about 14 µm) as the anode active material, the anodes in Examples 95 to 98 and Comparative Examples 9 to 11 were prepared according to the above method.

Table 16-1 shows the compositions of the anodes in Examples 95 and 96 and Comparative Example 9, wherein the average sphericity degree of the graphite particles in Examples 1, 95 and 96 and Comparative Example 9 is about 0.68, and the graphite particles are the same as those in Table 2-2.

**Table 16-1**

| No. | Average sphericity degree of SiOₓ particles | Number N of graphite particles around SiOₓ particles | Percentage of SiOₓ particles around which the number of graphite particles is N accounting for the total number of SiOₓ particles | Specific surface area (m².g⁻¹) | Capacity per gram^{∗}(mAh.g⁻¹) | First efficiency |
|---|---|---|---|---|---|---|
| Example 1 | 0.92 | 8-14 | 70% | 1.28 | 1682 | 69.4% |
| Example 95 | 0.89 | 8-14 | 70% | 1.31 | 1672 | 68.7% |
| Example 96 | 0.85 | 8-14 | 70% | 1.28 | 1687 | 68.9% |
| Comparative Example 9 | 0.76 | 8-14 | 70% | 1.35 | 1684 | 69.2% |

Table 16-2 shows the compositions of the anodes in Examples 1, 97 and 98 and Comparative Examples 9 and 10, wherein the average sphericity degree of the SiOₓ particles is about 0.92, and the Dᵥ50 is about 5.3 µm.

**Table 16-2**

| No. | Average sphericity degree of graphite particles | Number N of graphite particles around SiOₓ particles | Percentage of SiOₓ particles around which the number of graphite particles is N accounting for the total number of SiOₓ particles | Specific surface area (m².g⁻¹) | Capacity per gram of graphite^{∗}(mAh.g⁻¹) | First efficiency of graphite |
|---|---|---|---|---|---|---|
| Example 1 | 0.68 | 8-14 | 70% | 1.06 | 355 | 92.6% |
| Example 97 | 0.62 | 8-14 | 70% | 1.07 | 355 | 92.5% |
| Example 98 | 0.74 | 8-14 | 70% | 1.01 | 355 | 92.6% |
| Comparative Example 10 | 0.84 | 8-14 | 70% | 1.08 | 355 | 92.7% |
| Comparative Example 11 | 0.55 | 8-14 | 70% | 1.1 | 355 | 92.3% |

Tables 16-3 and 16-4 show the performance test results of the lithium ion batteries prepared with the anodes in Examples 1 and 95 to 98 and Comparative Examples 9 to 11.

**Table 16-3**

| No. | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 1 | 92.5% | 89.5% | 6.2% | 7.4% | 86.7% |
| Example 95 | 91.1% | 87.2% | 7.2% | 8.3% | 86.1% |
| Example 96 | 89.6% | 86.4% | 8.2% | 9.2% | 85.1% |
| Comparative Example 9 | 82.7% | 80.4% | 9.5% | 10.8% | 83.6% |

**Table 16-4**

| No. | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 1 | 92.5% | 89.5% | 6.2% | 7.4% | 86.7% |
| Example 97 | 91.1% | 87.2% | 6.8% | 8.3% | 84.1% |
| Example 98 | 89.6% | 86.4% | 8.2% | 9.2% | 87.1% |
| Comparative Example 10 | 82.7% | 80.4% | 9.5% | 10.8% | 87.6% |
| Comparative Example 11 | 83.9% | 81.7% | 9.2% | 10.5% | 87.2% |

It can be seen from the comparison of Examples 1, 95, and 96 with Comparative Example 9 and the comparison of Examples 1, 97, and 98 with Comparative Examples 10 and 11 that, when 70% of the SiOₓ particles have 8-14 graphite particles around the same, the cycle performance, deformation resistance and rate performance of the lithium ion batteries with the difference between the average sphericity degrees of the silicon-based particles and the graphite particles being in the range of about 0.1 to 0.3 are significantly better than those of lithium ion batteries with a difference outside the range of about 0.1 to 0.3.

This is because when the difference between the average sphericity degrees of the silicon-based particles and the graphite particles is in the range of about 0.1 to 0.3, the stress caused by the expansion of the SiOₓ particles during lithium intercalation can be effectively and uniformly dispersed and the particle displacement of the SiOₓ particles during the expansion and contraction is reduced, thereby reducing the generation of cracks on the surface of SiOₓ particles, the accumulation of SEIs and the rate of corrosion on the surface of the SiOₓ particles.

References throughout the specification to "some embodiments," "partial embodiments," "one embodiment," "another example," "example," "specific example" or "partial examples" means that at least one embodiment or example of the application includes specific features, structures, materials or characteristics described in the embodiments or examples. Thus, the descriptions appearing throughout the specification, such as "in some embodiments," "in an embodiment," "in one embodiment," "in another example," "in an example," "in a particular example" or "for example," are not necessarily the same embodiment or example in the application. Furthermore, the particular features, structures, materials or characteristics herein may be combined in any suitable manner in one or more embodiments or examples.

Although illustrative embodiments have been demonstrated and described, it is to be understood by those skilled in the art that the above-mentioned embodiments cannot be construed as limitations to the present application, and that changes, replacements and modifications can be made to the embodiments without departing from the spirit, principle, and scope of the present application.

## Claims

1. An anode, comprising silicon-based particles and graphite particles, wherein the number of graphite particles present within a range of about 0 to 6 µm in a vertical distance from the edge of the silicon-based particles is N; and based on a total number of the silicon-based particles, more than about 50% of the silicon-based particles meet: 6≤N≤17.

2. The anode according to claim 1, wherein in the X-ray diffraction pattern of the silicon-based particles, the highest intensity at 2θ within the range of about 28.0° to 29.0° is I₂, and the highest intensity at 2θ within the range of about 20.5° to 21.5° is I₁, wherein about 0<I₂/I₁≤ about 1.

3. The anode according to claim 1, wherein the silicon-based particles have a particle size distribution meeting about 0.3≤Dn10/Dv50≤about 0.6.

4. The anode according to claim 1, wherein the silicon-based particles comprise a silicon composite substrate and an oxide MeO_{y} layer, wherein the oxide MeO_{y} layer is coated at least a portion of the silicon composite substrate, wherein Me includes at least one of Al, Si, Ti, Mn, V, Cr, Co or Zr, and y is 0.5 to 3; and wherein the oxide MeO_{y} layer comprises a carbon material.

5. The anode according to claim 1, wherein the silicon-based particles comprise a silicon composite substrate and a polymer layer, wherein the polymer layer is coated on at least a portion of the silicon composite substrate, wherein the polymer layer comprises a carbon material.

6. The anode according to claim 2, wherein the silicon-based particles have a particle size distribution meeting: about 0.3≤Dn10/Dv50≤about 0.6.

7. The anode according to claim 2, wherein the silicon-based particles comprise a silicon composite substrate and an oxide MeO_{y} layer, wherein the oxide MeO_{y} layer is coated on at least a portion of the silicon composite substrate, wherein Me includes at least one of Al, Si, Ti, Mn, V, Cr, Co or Zr, and y is 0.5 to 3; and wherein the oxide MeO_{y} layer comprises a carbon material.

8. The anode according to claim 2, wherein the silicon-based particles comprise a silicon composite substrate and a polymer layer, wherein the polymer layer is coated on at least a portion of the silicon composite substrate, wherein the polymer layer comprises a carbon material.

9. The anode according to claim 3, wherein the silicon-based particles comprise a silicon composite substrate and an oxide MeO_{y} layer, wherein the oxide MeO_{y} layer is coated on at least a portion of the silicon composite substrate, wherein Me includes at least one of Al, Si, Ti, Mn, V, Cr, Co or Zr, and y is 0.5 to 3; and wherein the oxide MeO_{y} layer comprises a carbon material.

10. The anode according to claim 3, wherein the silicon-based particles comprise a silicon composite substrate and a polymer layer, wherein the polymer layer is coated on at least a portion of the silicon composite substrate, wherein the polymer layer comprises a carbon material.

11. The anode according to claim 4, wherein the silicon-based particles further comprise a polymer layer, wherein the polymer layer is coated on at least a portion of the oxide MeO_{y} layer, wherein the polymer layer comprises a carbon material.

12. The anode according to claim 6, wherein the silicon-based particles comprise a silicon composite substrate and an oxide MeO_{y} layer, wherein the oxide MeO_{y} layer is coated on at least a portion of the silicon composite substrate, wherein Me includes at least one of Al, Si, Ti, Mn, V, Cr, Co or Zr, and y is 0.5 to 3; and wherein the oxide MeO_{y} layer comprises a carbon material.

13. The anode according to claim 6, wherein the silicon-based particles comprise a silicon composite substrate and a polymer layer, wherein the polymer layer is coated on at least a portion of the silicon composite substrate, wherein the polymer layer comprises a carbon material.

14. The anode according to claim 9, wherein the silicon-based particles further comprise a polymer layer, wherein the polymer layer is coated on at least a portion of the oxide MeOy layer, wherein the polymer layer comprises a carbon material.

15. The anode according to claim 12, wherein the silicon-based particles further comprise a polymer layer, wherein the polymer layer is coated on at least a portion of the oxide MeOy layer, wherein the polymer layer comprises a carbon material.

16. The anode according to claim 1, wherein the average sphericity degree of the graphite particles is A, the average sphericity degree of the silicon-based particles is B, and A and B meet: about 0 <B-A ≤ about 0.3.

17. The anode according to claim 16, wherein in the X-ray diffraction pattern of the silicon-based particles, the highest intensity at 2θ within the range of about 28.0° to 29.0° is I₂, and the highest intensity at 2θ within the range of about 20.5° to 21.5° is I₁, wherein about 0<I₂/I₁≤ about 1.

18. The anode according to claim 16, wherein the silicon-based particles have a particle size distribution meeting: about 0.3≤Dn10/Dv50≤about 0.6.

19. The anode according to claim 16, wherein the silicon-based particles comprise a silicon composite substrate and an oxide MeO_{y} layer, wherein the oxide MeO_{y} layer is coated onat least a portion of the silicon composite substrate, wherein Me includes at least one of Al, Si, Ti, Mn, V, Cr, Co or Zr, and y is 0.5 to 3; and wherein the oxide MeO_{y} layer comprises a carbon material.

20. The anode according to claim 16, wherein the silicon-based particles comprise a silicon composite substrate and a polymer layer, wherein the polymer layer is coated on at least a portion of the silicon composite substrate, wherein the polymer layer comprises a carbon material.

21. The anode according to claim 17, wherein the silicon-based particles have a particle size distribution meeting: about 0.3≤Dn10/Dv50≤about 0.6.

22. The anode according to claim 17, wherein the silicon-based particles comprise a silicon composite substrate and an oxide MeO_{y} layer, wherein the polymer layer is coated on at least a portion of the silicon composite substrate, wherein Me includes at least one of Al, Si, Ti, Mn, V, Cr, Co or Zr, and y is 0.5 to 3; and wherein the oxide MeO_{y} layer comprises a carbon material.

23. The anode according to claim 17, wherein the silicon-based particles comprise a silicon composite substrate and a polymer layer, wherein the polymer layer is coated on at least a portion of the silicon composite substrate, wherein the polymer layer comprises a carbon material.

24. The anode according to claim 18, wherein the silicon-based particles comprise a silicon composite substrate and an oxide MeO_{y} layer, wherein the oxide MeO_{y} layer is coated on at least a portion of the silicon composite substrate, wherein Me includes at least one of Al, Si, Ti, Mn, V, Cr, Co or Zr, and y is 0.5 to 3; and wherein the oxide MeO_{y} layer comprises a carbon material.

25. The anode according to claim 18, wherein the silicon-based particles comprise a silicon composite substrate and a polymer layer, wherein the polymer layer is coated on at least a portion of the silicon composite substrate, wherein the polymer layer comprises a carbon material.

26. The anode according to claim 19, wherein the silicon-based particles further comprise a polymer layer, wherein the polymer layer is coated on at least a portion of the oxide MeO_{y} layer, wherein the polymer layer comprises a carbon material.

27. The anode according to claim 21, wherein the silicon-based particles comprise a silicon composite substrate and an oxide MeO_{y} layer, wherein the oxide MeO_{y} layer is coated on at least a portion of the silicon composite substrate, wherein Me includes at least one of Al, Si, Ti, Mn, V, Cr, Co or Zr, and y is 0.5 to 3; and wherein the oxide MeO_{y} layer comprises a carbon material.

28. The anode according to claim 21, wherein the silicon-based particles comprise a silicon composite substrate and a polymer layer, wherein the polymer layer is coated on at least a portion of the silicon composite substrate, wherein the polymer layer comprises a carbon material.

29. The anode according to claim 24, wherein the silicon-based particles further comprise a polymer layer, wherein the polymer layer is coated on at least a portion of the oxide MeO_{y} layer, wherein the polymer layer comprises a carbon material.

30. The anode according to claim 27, wherein the silicon-based particles further comprise a polymer layer, wherein the polymer layer is coated on at least a portion of the oxide MeO_{y} layer, wherein the polymer layer comprises a carbon material.

31. The anode according to any one of claims 4, 5, 7-15, 19, 20 and 22-30, wherein the silicon composite substrate comprises SiOₓ, wherein 0.6≤x≤ 1.5.

32. The anode according to any one of claims 4, 5, 7-15, 19, 20 and 22-30, wherein the silicon composite substrate comprises nano-Si grains, SiO, SiO₂, or any combination thereof.

33. The anode according to claim 32, wherein the nano-Si crystalline grains have a size of about 100 nm or less.

34. The anode according to any one of claims 4, 7, 9, 11, 12, 14, 15, 19, 22, 24, 26, 27, 29 and 30, wherein a thickness of the oxide MeO_{y} layer is about 0.5 nm to 1000 nm.

35. The anode according to any one of claims 4, 7, 9, 11, 12, 14, 15, 19, 22, 24, 26, 27, 29 and 30, wherein based on a total weight of the silicon-based particles, the weight percentage of the Me element is about 0.005 to 1 wt%.

36. The anode according to any one of claims 5, 8, 10, 11, 13-15, 20, 23, 25, 26, and 28-30, wherein the polymer layer comprises polyvinylidene fluoride and derivatives of polyvinylidene fluoride, carboxymethyl cellulose and derivatives of carboxymethyl cellulose, sodium carboxymethyl cellulose and derivatives of sodium carboxymethyl cellulose, polyvinylpyrrolidone and derivatives of polyvinylpyrrolidone, polyacrylic acid and derivatives of polyacrylic acid, polystyrene-butadiene rubber, polyacrylamide, polyimide, polyamideimide or any combination thereof.

37. The anode according to any one of claims 5, 8, 10, 11, 13-15, 20, 23, 25, 26, and 28-30, wherein based on a total weight of the silicon-based particles, the weight percentage of the polymer layer is about 0.05 to 5 wt%.

38. The anode according to any one of claims 5, 8, 10, 11, 13-15, 20, 23, 25, 26, and 28-30, wherein a thickness of the polymer layer is about 1 nm to 100 nm.

39. The anode according to any one of claims 4, 5, 7-15, 19, 20 and 22-30, wherein the carbon material comprises carbon nanotubes, carbon nanoparticles, carbon fibers, graphene, or any combination thereof.

40. The anode according to any one of claims 1 to 30, wherein the silicon-based particles have a particle size Dv50 of about 0.01 to 50 µm.

41. The anode according to any one of claims 1 to 30, wherein the silicon-based particles have a specific surface area of about 1 to 50 m²/g.

42. The anode according to any one of claims 1 to 30, wherein the silicon-based particles have an average sphericity degree of about 0.8 to 1.0.

43. The anode according to claim 42, wherein the number of silicon-based particles having a sphericity degree of less than about 0.8 accounts for about 10% or less of the total number of the silicon-based particles.

44. The anode according to any one of claims 1 to 30, wherein the graphite particles have an average sphericity degree of about 0.5 to 0.8.

45. The anode according to any one of claims 1 to 30, wherein the number of graphite particles having a sphericity degree of about 0.5 to 0.8 accounts for about 95% or more of the total number of the graphite particles.

46. The anode according to any one of claims 1 to 30, wherein the graphite particles have a scattering peak I₁₃₃₀ at about 1330 cm⁻¹ and a scattering peak I₁₅₈₀ at about 1580 cm⁻¹ in Raman spectroscopy, wherein the I₁₃₃₀/I₁₅₈₀ ratio meets about 0.7<I₁₃₃₀/I₁₅₈₀< about 2.0.

47. The anode according to any one of claims 1 to 30, wherein the graphite particles have a particle size Dv50 of about 0.01 to 80 µm.

48. The anode according to any one of claims 1 to 30, wherein the graphite particles have a specific surface area of about 30 m²/g or less.

49. The anode according to any one of claims 1 to 30, wherein the graphite particles have an OI value of about 1 to 30.

50. An electrochemical device, comprising an anode according to any one of claims 1 to 49.

51. The electrochemical device according to claim 50, which is a lithium ion battery.

52. An electronic device, comprising an electrochemical device according to claim 50.
